(19) Europäisches Patentamt
European Patent Office
Office européen des brevets

(11) **EP 4 144 147 B1**

(12) **EUROPEAN PATENT SPECIFICATION**

(45) Date of publication and mention
of the grant of the patent:
**14.02.2024 Bulletin 2024/07**

(21) Application number: **21722435.1**

(22) Date of filing: **28.04.2021**

(51) International Patent Classification (IPC):
*H04W 52/28* (2009.01)    *H04W 52/08* (2009.01)
*H04W 52/32* (2009.01)    *H04W 52/36* (2009.01)
*H04W 74/00* (2009.01)    *H04W 74/08* (2024.01)

(52) Cooperative Patent Classification (CPC):
**H04W 74/008; H04W 52/08; H04W 52/281;
H04W 52/325; H04W 52/362;** H04W 74/006;
H04W 74/0833

(86) International application number:
**PCT/EP2021/061066**

(87) International publication number:
**WO 2021/219690 (04.11.2021 Gazette 2021/44)**

(54) **MESSAGE PRIORITIZATION IN RANDOM ACCESS PROCEDURE**

NACHRICHTENPRIORISIERUNG IN EINEM DIREKTZUGRIFFSVERFAHREN

HIÉRARCHISATION DE MESSAGES DANS UNE PROCÉDURE D'ACCÈS ALÉATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2020 PCT/CN2020/087782**

(43) Date of publication of application:
**08.03.2023 Bulletin 2023/10**

(73) Proprietor: **Telefonaktiebolaget LM Ericsson
(publ)
164 83 Stockholm (SE)**

(72) Inventors:
• **LI, Jingya
417 58 Göteborg (SE)**
• **LIN, Zhipeng
Nanjing, Jiangsu 211100 (CN)**
• **SAHLIN, Henrik
435 41 Mölnlycke (SE)**

(74) Representative: **Ericsson
Patent Development
Torshamnsgatan 21-23
164 80 Stockholm (SE)**

(56) References cited:
• **PERSPECTA LABS ET AL: "PRACH Prioritization
for MPS and MCS", 3GPP DRAFT;
R2-1910871_PRACH_PRIORITIZATION_MPS_M
CS, 3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , vol. RAN
WG2, no. Prague, Czech Republic; 20190826 -
20190830 15 August 2019 (2019-08-15),
XP051768638, Retrieved from the Internet:
URL:http://www.3gpp.org/ftp/tsg_ran/WG2_RL
2/TSGR2_107/Docs/R2-1910871.zip [retrieved on
2019-08-15]**
• **ERICSSON: "Power control of msgA PUSCH
transmissions", 3GPP DRAFT; R1-1907183
POWER CONTROL OF MSGA PUSCH
TRANSMISSIONS, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANC , vol. RAN WG1, no. Reno, USA;
20190513 - 20190517 13 May 2019 (2019-05-13),
XP051728626, Retrieved from the Internet:
URL:http://www.3gpp.org/ftp/Meetings%5F3GP
P%5FSYNC/RAN1/Docs/R1%2D1907183%2Ezip
[retrieved on 2019-05-13]**

- ERICSSON: "Remaining issues of UL data transmission procedure", 3GPP DRAFT; R1-1807258 REMAINING DETAILS OF UL TRANSMISSION PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Busan, Korea; 20180521 - 20180525 20 May 2018 (2018-05-20), XP051442454, Retrieved from the Internet: URL:http://www.3gpp.org/ftp/Meetings%5F3GP P%5FSYNC/RAN1/Docs/ [retrieved on 2018-05-20]

**Description**

TECHNICAL FIELD

Embodiments herein relate to prioritized messaging in connection with a random access procedure for mission critical or other prioritized services and devices.

BACKGROUND

First responders, such as fire-fighters, the police, and emergency medical service providers, often require fast, reliable and secure communications in various mission critical (MC) situations. For instance, in disaster and emergency situations, first responders as well as other essential public safety service providers rely on the availability of MC network services to coordinate their operations. Therefore, cellular coverage can be essential. Compared to other use cases (e.g., enhanced Mobile Broadband (eMBB)), the coverage requirements for public safety communications are typically more strict (e.g., 99% of the population, 99% of landmass, 99.5% outdoor, 95% indoor, etc.).

Before data transmission and reception, an MC device (e.g., user equipment (UEs)) must perform a random access procedure to establish a radio resource control (RRC) connection to the network. However, in existing systems, a mechanism is not available for adapting the random access procedure to ensure fast and reliable network connection establishment for MC devices. Accordingly, there remains a need for systems, methods, and devices for prioritization of certain communications, and in particular, for MC communications where a network is shared between MC devices and commercial devices.

The document 3GPP R2-1910871 "PRACH prioritization for MPS and MCS" by Perspecta Labs et al., 3GPP TSG RAN WG2 Meeting #107, August 26th-30th, 2019, discloses PRACH prioritization based on parameters provided in SIB1.

The document 3GPP R1-1907183 "Power control of msgA PUSCH transmissions" by Ericsson, 3GPP TSG-RAN WG1 Meeting #97, May 13th-17th, 2019, discloses an offset between msgA PUSCH and the preamble target power.

The document R1-1807258 "Remaining issues of UL data transmission procedure" by Ericsson, 3GPP TSG-RAN WG1 Meeting #93, May 21st-25th, 2018, discloses a RAR grant field including a TPC command for Msg3 PUSCH.

SUMMARY

The invention is defined by the appended claims. As defined by claim 1, the invention provides a method for use in a device, the method comprising: receiving broadcast system information from a node indicating one or more priority transmission configurations for high priority devices; determining that the device is enabled for at least one of the priority transmission configurations based at least in part on the broadcasted system information and a status of the device, wherein the at least one priority transmission configuration indicates a transmit power for random access procedure physical uplink shared channel, PUSCH, transmissions by high priority devices; and sending a random access procedure PUSCH transmission using the transmit power indicated by the at least one priority transmission configuration.

Preferred embodiments of the method of claim 1 are defined by claims 2 to 9.

As defined by claim 10, the invention provides a method for use in a device, the method comprising: receiving a grant message from a node indicating a first transmit power; and sending a random access procedure physical uplink shared channel, PUSCH, transmission to the node with the first transmit power, wherein the first transmit power is based at least in part on a high priority status of the device.

Preferred embodiments of the method of claim 10 are defined by claims 11 to 13.

As defined by claim 14, the invention provides a computer program comprising instructions which when executed by processing circuitry of an apparatus causes the apparatus to perform the method of any one of claims 1-9 or claims 10-13.

As defined by claim 15, the invention provides a carrier containing the computer program of claim 14, wherein the carrier is one of an electronic signal, an optical signal, a radio signal, and a computer readable storage medium.

As defined by claim 16, the invention provides a device, the device being configured to: receive broadcast system information from a node indicating one or more priority transmission configurations for high priority devices; determine that the device is enabled for at least one of the priority transmission configurations based at least in part on the broadcasted system information and a status of the device, wherein the at least priority transmission configuration indicates a transmit power for random access procedure physical uplink shared channel, PUSCH, transmissions by high priority devices; and send a random access procedure PUSCH transmission using the transmit power indicated by the at least one priority transmission configuration.

Preferred embodiments of the device of claim 16 are defined by claim 17.

As defined by claim 18, the invention provides a device, the device being configured to: receive a grant message from a node indicating a first transmit power; and send a random access procedure physical uplink shared channel, PUSCH, transmission to the node with the first transmit power, wherein the first transmit power is based at least in part on a high priority status of the device.

Preferred embodiments of the device of claim 18 are defined by claim 19.

BRIEF DESCRIPTION OF THE DRAWINGS

The accompanying drawings, which are incorporated herein and form part of the specification, illustrate various embodiments.

FIG. 1A is a signal flow diagram illustrating a four-step random access procedure for initial access.
FIG. 1B is a signal flow diagram illustrating a two-step random access procedure for initial access.
FIG. 2 illustrates a system according to embodiments.
FIG. 3 is a schematic block diagram of a network node according to embodiments.
FIG. 4 is a schematic block diagram of a device according to some embodiments.
FIGs. 5A and 5B are flow charts illustrating a process according to embodiments.
FIGs. 6A and 6B are flow charts illustrating a process according to embodiments.
FIG. 7 is a flow chart illustrating a process according to embodiments.
FIG. 8 is a flow chart illustrating a process according to embodiments.
FIG. 9 is a flow chart illustrating a process according to embodiments.
FIG. 10 is a flow chart illustrating a process according to embodiments.

DETAILED DESCRIPTION

Without retransmission, certain messages may be the weakest uplink physical channel, thus limiting network coverage in a random access procedure. These messages could include, for example, physical uplink share channel (PUSCH) carrying Msg3 and/or MsgA. Therefore, it may be important to prioritize and improve the robustness of such messages (e.g., Msg3 and MsgA PUSCH transmissions) for MC devices. According to information about a UE and/or service priorities, a UE can apply differentiated random access procedure message transmission configurations depending on priority, such that transmissions from a high priority UE can be prioritized and received by the network node in a fast and reliable way. This could include, for instance, Msg3 or MsgA PUSCH transmissions.

Before a UE can properly communicate within a network, it typically must carry out a cell search to find, synchronize, and identify a cell. Then, it can acquire basic system information and perform random access procedures to establish a connection to the cell. In NR, the combination of synchronization signals (SS) and physical broadcast channel (PBCH) is referred to as a SS/PBCH block (SSB). Similar to LTE, a pair of SS, primary synchronization signal (PSS) and secondary synchronization signal (SSS), is periodically transmitted on downlink from each cell to allow a UE to initially access to the network. By detecting SS, a UE can obtain the physical cell identity, achieve downlink synchronization in both time and frequency, and acquire the timing for the physical broadcast channel (PBCH). PBCH carries the master information block (MIB), which contains minimum system information that a UE needs to acquire system information block 1 (SIB1). SIB1 carries the remaining minimum system information that is needed for a UE to be able to perform a subsequent random access procedure. Two types of random access procedures in NR are the 4-step and 2-step procedures. Aspects of this disclosure use the 4-step and s-step random access procedures as examples (including exemplary use of Msg3 and MsgA); however, embodiments can also be used for other random access procedures and for prioritization of other initial messaging for mission critical communications or other prioritized transmissions.

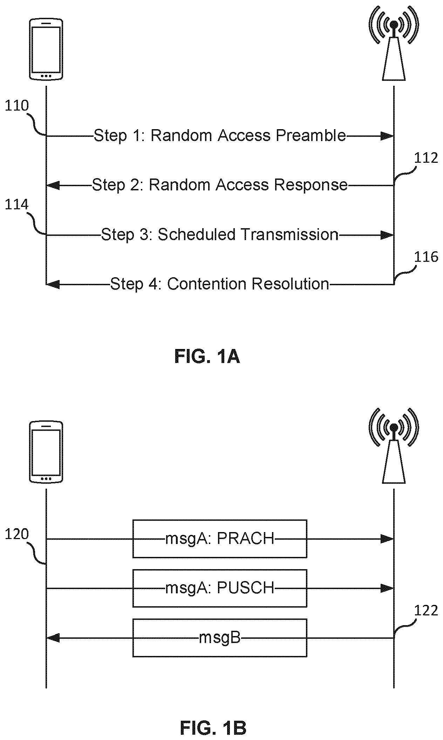

An example of a 4-step random access procedure is illustrated in FIG. 1A. For initial access, a UE initiates the random access procedure by transmitting 110 in the uplink (UL) a random access preamble (Msg1 in this example) on a physical random access channel (PRACH). After detecting the Msg1, the node (e.g., gNB) will respond 112 by transmitting in the downlink (DL) a random access response (RAR) on a physical downlink share channel (PDSCH) (Msg2 in this example). In the third step 114, after successfully decoding Msg2, the UE continues the procedure by transmitting in UL a PUSCH (Msg3) for terminal identification and RRC connection establishment request. In the last step 116 of the procedure, the gNB transmits in DL a PDSCH (Msg4) for contention resolution. There can be cases that multiple UEs select the same random access preamble and transmit the preamble on the same PRACH time/frequency resource. This preamble collision is called contention. One of the purposes of applying step 3 and step 4 is to resolve such potential contention. According to embodiments, a UE may use prioritized transmission configurations for messaging in step 3, for instance, based on an access identity and/or category of the UE.

The Msg3 can be scheduled by the random access response (RAR) in a 4-step procedure, for example, as illustrated with respect to FIG. 1A. After detecting a random access preamble (Msg1), the gNB can respond by transmitting in the DL an RAR on a PDSCH (Msg2). The PDSCH carrying RAR is scheduled by a physical downlink control channel (PDCCH) carrying DCI format 1_0 with CRC scrambled by a RA-RNTI in this example. The RA-RNTI is associated with the PRACH occasion in which the preamble is detected. If multiple preambles from multiple UEs are detected on the same time-frequency PRACH occasion, then, the Msg2 carried on a PDSCH will consist of multiple RARs. The UE derives its corresponding RA-RNTI based on the PRACH occasion selected for its preamble transmission. After transmitting a random access preamble, the UE will start monitoring the PDCCH candidates scrambled by the corresponding RA-RNTI within a time window, which is provided by the parameter *ra-Response Window* in SIB1. If a UE detects a PDCCH with its corresponding RA-RNTI within the RAR window and if it successfully decodes the associated PDSCH carrying Msg2, then, the UE will check whether the RAPID contained in the RAR(s) contained in Msg2 matches with its selected preamble index. If so, the UE considers this RAR reception successful. Otherwise, the UE can start a new random access attempt after the time window expires, until a successful Msg2 reception or it reaches the maximum allowed number of preambles transmissions. As described in 3GPP TS 38.321, the content of the RAR for a detected random access preamble can include the following: (i) the random access preamble ID (RAPID), which indicates the received preamble index; (ii) a timing advance command, which indicates the index value to be used for adjusting the timing for the subsequent UL transmissions; (iii) an UL grant, also referred to as an RAR UL grant, which is used for scheduling PUSCH carrying Msg3; and (iv) temporary C-RNTI (TC-RNTI), which indicates the temporary ID that a UE can use for Msg3 transmission.

Additionally, an RAR grant content field size is illustrated in 3GPP TS 38.38.212, which is shown below in Table A.

TABLE A

| RAR grant field | Number of bits |
|---|---|
| Frequency hopping flag | 1 |
| PUSCH frequency resource allocation | 14, for operation without shared spectrum channel access<br>12, for operation with shared spectrum channel access |
| PUSCH time resource allocation | 4 |
| MCS | 4 |
| TPC command for PUSCH | 3 |
| CSI request | 1 |
| ChannelAccess-CPext | 0, for operation without shared spectrum channel access<br>2, for operation with shared spectrum channel access |

In certain aspects, a UE performs initial Msg3 transmission on PUSCH based on the UL grant received in RAR. To improve the coverage of Msg3 transmission, a gNB can schedule a Msg3 PUSCH retransmission using a DCI format 0_0 with CRC scrambled by the TC-RNTI provided in the corresponding RAR. However, any potential Msg3 coverage enhancements would be achieved at the cost of increased latency. For instance, when a base station cannot detect a previously transmitted PUSCH, it will schedule the UE to retransmit UL data on PUSCH. This creates additional latency and signaling. Some embodiments using prioritized configurations can provide for robust coverage enhancement without the increased latency associated with such scheduling. The TPC command included in RAR is for the dynamic power control for Msg3 initial transmission. For retransmissions of Msg3, it is included in DCI format 0_0 with CRC scrambled by TC-RNTI.

A 2-step random access procedure, also referred to as Type-2 random access procedure, is illustrated in FIG. 1B. In the first step of the procedure, a UE sends 120 a message A (MsgA), including a random access PRACH together with higher layer data such as a RRC connection request. After detecting the MsgA, the network sends 122 an RAR (called MsgB here) that includes a UE identifier assignment, timing advance information, and contention resolution message, etc. The MsgB carries RAR and it is transmitted on a PDSCH, which is scheduled by PDCCH with CRC scrambled by MsgB-RNTI. The value of MsgB-RNTI is derived by adding a fixed offset to the RA-RNTI calculated based on the time and frequency resource of the PRACH occasion used for the transmission of the MsgA preamble part. A UE monitors the MsgB in a RAR window with maximum length (e.g., 40ms) after the transmission of MsgA.

As shown in FIG. 1B, the MsgA can include a transmission on PUSCH, such as a small payload for the message with data. A PUSCH occasion is typically defined as the time and frequency resource used for one MsgA PUSCH transmission. For one MsgA PUSCH occasion, one or more DMRS resources can be configured, one of which will be selected for each PUSCH transmission within the PUSCH occasion. In certain aspects, a set of PUSCH occasions are cell-specifically configured per MsgA PUSCH configuration, which are relative to and mapped by a group of preambles in a set of PRACH occasions in one PRACH slot. An exemplary mapping between one or multiple MsgA preambles and a MsgA PUSCH occasion associated with a DMRS resource is described below.

Each consecutive number of $N_{preamble}$ preamble indexes from valid PRACH occasions in a PRACH slot are mapped to a valid PUSCH occasion and the associated DMRS resource where $N_{preamble} = ceil(T_{preamble}/T_{PUSCH})$, $T_{preamble}$ is a total number of valid PRACH occasions per association pattern period multiplied by the number of preambles per valid PRACH occasion provided by *msgA-PUSCH-PreambleGroup*, and $T_{PUSCH}$ is a total number of valid PUSCH occasions per PUSCH configuration per association pattern period multiplied by the number of DMRS resource indexes per valid PUSCH occasion provided by *msgA-DMRS-Config.* In this instance, the mapping is: first, in increasing order of preamble indexes within a single PRACH occasion; second, in increasing order of frequency resource indexes for frequency multiplexed PRACH occasions; and third, in increasing order of time resource indexes for time multiplexed PRACH occasions within a PRACH slot. The mapping can also be: first, in increasing order of frequency resource indexes $f_{id}$ for frequency multiplexed PUSCH occasion; second, in increasing order of DMRS resource indexes within a PUSCH occasion, where a DMRS resource index $DMRS_{id}$ is determined first in an ascending order of a DMRS port index and second in an ascending order of a DMRS sequence index (TS 38.211); third, in increasing order of time resource indexes $t_{id}$ for time multiplexed PUSCH occasions within a PUSCH slot; and fourth, in increasing order of indexes for $N_s$ PUSCH slots. The power control of MsgA PUSCH can rely on the power ramping of the whole MsgA, and the power offset between MsgA PUSCH and the preamble part. According to embodiments, a power offset is defined between the MsgA PUSCH and MsgA PRACH based on a priority status of the device.

In NR, MCS tables can be used for PDSCH. In NR for PDSCH or for PUSCH with CP-OFDM waveforms, three tables are provided in 3GPP TS 38.214 V16.0.0. The first (Table B) is for normal spectrum efficiency with maximum modulation order of 6, *i.e.* 64QAM. The second (Table C) is for normal spectrum efficiency with maximum modulation order of 8, *i.e.* 256QAM. The third (Table D) is for low spectrum efficiency with maximum modulation order of 6, *i.e.* 64QAM. For Msg3 or MsgA PUSCH with CP-OFDM, *i.e.* when the transform precoding is disabled, Table B can used, and thus, the MCS Index is restricted to be no more than 15, *i.e.* $I_{MCS} < 16$.

TABLE B

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |

(continued)

| MCS Index $I_{MCS}$ | Modulation Order $Q_m$ | Target code Rate $R$ x [1024] | Spectral efficiency |
|---|---|---|---|
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

TABLE C

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |

(continued)

| MCS Index $I_{MCS}$ | Modulation Order $Q_m$ | Target code Rate $R$ x [1024] | Spectral efficiency |
|---|---|---|---|
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

TABLE D

| MCS Index $I_{MCS}$ | Modulation Order $Q_m$ | Target code Rate $R$ x [1024] | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |

(continued)

| MCS Index $I_{MCS}$ | Modulation Order $Q_m$ | Target code Rate $R$ x [1024] | Spectral efficiency |
|---|---|---|---|
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

For PUSCH with DFT-s-OFDM waveform, *i.e.* when transform precoding is enabled, two MCS tables are provided in 3GPP TS 38.214 V16.0.0: a first (Table E) with transform precoding is for normal spectrum efficiency with maximum modulation order of 6, *i.e.* 64QAM; and a second (Table F) with transform precoding for low spectrum efficiency with maximum modulation order of 6, *i.e.* 64QAM. For Msg3 PUSCH and MsgA PUSCH with transform precoding enabled, normal spectrum efficiency table, *i.e.* Table E, can be used and the MCS Index is restricted to be no more than 15, *i.e.* $I_{MCS}$ < 16.

TABLE E

| MCS Index $I_{MCS}$ | Modulation Order $Q_m$ | Target code Rate R x 1024 | Spectral efficiency |
|---|---|---|---|
| 0 | q | 240/ q | 0.2344 |
| 1 | q | 314/ q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |

(continued)

| MCS Index $I_{MCS}$ | Modulation Order $Q_m$ | Target code Rate R x 1024 | Spectral efficiency |
|---|---|---|---|
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

TABLE F

| MCS Index $I_{MCS}$ | Modulation Order $Q_m$ | Target code Rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |

(continued)

| MCS Index $I_{MCS}$ | Modulation Order $Q_m$ | Target code Rate R x 1024 | Spectral efficiency |
|---|---|---|---|
| **25** | 6 | 616 | 3.6094 |
| **26** | 6 | 666 | 3.9023 |
| **27** | 6 | 772 | 4.5234 |
| **28** | q | reserved | |
| **29** | 2 | reserved | |
| **30** | 4 | reserved | |
| **31** | 6 | reserved | |

Moreover, for initial transmission of Msg3 or retransmission of Msg3, a 2-bit field signaling the channel access type and CP extension can be included in the UL grant in a random access response message or in DCI format 0_0 with CRC scrambled by TC-RNTI, respectively. For example, the 2-bit field indicates the row index of below table (Table G), which provides list of channel access types and CP extension durations as defined in 3GPP TS 37.213 for operation of channel access with shared spectrum, *e.g.* operation on unlicensed spectrum.

TABLE G

| Bit field mapped to index | Channel Access Type | CP extension |
|---|---|---|
| 0 | Type2C-ULChannelAccess defined in [clause 4.2.1.2.3 in 37.213] | C2*symbol length - 16 us - TA |
| 1 | Type2A-ULChannelAccess defined in [clause 4.2.1.2.1 in 37.213] | C3 *symbol length - 25 us - TA |
| 2 | Type2A-ULChannelAccess defined in [clause 4.2.1.2.1 in 37.213] | C 1 * symbol length - 25 us |
| 3 | Type1-ULChannelAccess defined in [clause 4.2.1.1 in 37.213] | 0 |

In certain aspects, different methods are provided on how to configure a prioritized, fast, and robust Msg3 or MsgA PUSCH transmission for a UE configured with high priority services. For example, and according to embodiments, a higher transmit power can be configured for the transmission of Msg3 or MsgA PUSCH from a high priority device, such as a UE.

In certain aspects, a differentiated transmit power configuration is used for Msg3 PUSCH and/or MsgA PUSCH based on the service priority of a UE. As an example, the priority of a UE can be defined (or determined) based on the UE Access Identity number(s) that are provisioned or otherwise stored in the SIM/USIM of the UE, and/or the UE Access Category associated to its service type. Therefore, it is possible for a network to configure differentiated transmit power configurations for the transmission of Msg3 PUSCH or MsgA PUSCH, where the implementation is dependent on the UE access identity and/or categories.

According to embodiments, different approaches can be used to enable differentiated transmit power values for random access procedure messages, such asMsg3 PUSCH and/or MsgA PUSCH transmissions. In some unclaimed suine embodiments, differentiated transmit power for Msg3 PUSCH and/or MsgA PUSCH messages is enforced by a UE. Such an approach does not require network knowledge of the priority of a particular UE. In some embodiments, differentiated transmit power for Msg3 PUSCH and/or MsgA PUSCH messages is fully controlled by a network node. This type of approach may require that the network node has knowledge of UE priority when scheduling Msg3 PUSCH and/or MsgA PUSCH transmissions. In certain aspects, combinations of these embodiments may be used. For instance, prioritized transmission characteristics can be applied based on both node-side knowledge, as well as one or more determinations by the UE itself.

According to embodiments, a UE itself checks if it should apply a higher transmit power for messaging, such as random access procedure messaging, including a Msg3 PUSCH and/or MsgA PUSCH transmission. This can be done, for instance, by checking the broadcasted system information received from the network node to see whether a differentiated transmit power control for Msg3 PUSCH and/or MsgA PUSCH is enabled for its configured priority. It may also comprise checking stored information on the UE. In embodiments, differentiated transmit power for Msg3 PUSCH and/or MsgA PUSCH is enforced by a UE based on its configured access identity(ies) and/or access category.

As an example, in a NR implementation, Access Identity 1 and Access Identity 2 can be used for UEs configured with multimedia priority services and mission critical services, respectively. In addition, NR Rel-16 has introduced a field *ra-PrioritizationforAccessIdentity* in the *RACH-ConfigCommon* IE in *SIB1*, with the purpose to support the configuration of prioritized PRACH retransmission for 4-step random access procedure. The parameter, *ra-PrioritizationForAI-r 16,* in the field *ra-PrioritizationforAccessIdentity* is a 2-bit bitmap, which indicates whether Access Identity 1 (for UEs configured with multimedia priority services), or Access Identity 2 (for UEs configured with mission critical services) are enabled for prioritized PRACH or not. An example is shown below:

```
[[
ra-PrioritizationForAccessIdentity          SEQUENCE {
     ra-Prioritization-r16                       RA-Prioritization,
     ra-PrioritizationForAI-r16                  BIT STRING (SIZE (2))
}
OPTIONAL     -- Need R
]]
```

Similar signaling has been introduced in NR Rel-16 for 2-step random access procedure, e.g., in *ra-PrioritizationForAccessIdentityTwoStep-r16 in RACH-ConfigCommonTwoStepRA IE in SIB1.* An example is shown below:

```
ra-PrioritizationForAccessIdentityTwoStep-r16          SEQUENCE {
     ra-Prioritization-r16                                 RA-Prioritization
OPTIONAL, -- Need M
     ra-PrioritizationForAI-r16                            BIT STRING (SIZE (2))
OPTIONAL  -- Need M
}
OPTIONAL, -- Need R
```

According to embodiments, the legacy field *ra-PrioritizationforAccessIdentity* in the *RACH-ConfigCommon* IE in *SIB1* can be reused for a network node to enable prioritized Msg3 PUSCH transmission. Similarly, the existing field *ra-PrioritizationForAccessIdentityTwoStep-r16* in the *RACH-ConfigCommonTwoStepRA* IE in *SIB1* can be reused to enable prioritized MsgA PUSCH transmission.

Embodiments may be applied with respect to a 4-step random access procedure.

In an embodiment, a new UE behavior is defined for 4-step random access procedure such that if the legacy parameter *ra-PrioritizationForAI-r16* is present in the *RACH-ConfigCommon IE* in *SIB1*, it also indicates that prioritized Msg3 PUSCH is enabled for UEs configured with Access Identity 1 and/or 2. This may mean, for instance, that for Rel-16 UEs, if the parameter *ra-PrioritizationForAI-r16* is present, then, prioritized PRACH is enabled for UEs configured with Access Identity 1 and/or 2. For new release UEs, if the parameter *ra-PrioritizationForAI-r16* is present, then, both prioritized PRACH and prioritized msg3 PUSCH is enabled for UEs configured with Access Identity 1 and/or 2.

In another embodiment, a new parameter similar *to ra-PrioritizationForAI-r16*, e.g., *ra-PrioritizationForAI-r17*, is introduced in the field *ra-PrioritizationforAccessIdentity* in the *RACH-ConfigCommon IE* in *SIB1.* A UE behavior can be defined for 4-step random access procedure such that if the new parameter is present, then, it at least indicates that prioritized Msg3 PUSCH is enabled for UEs configured with Access Identity 1 and/or 2. This can mean that for Rel-16 UEs, the legacy parameter *ra-PrioritizationForAI-r16* is used for prioritized PRACH configuration. For new release UEs, they will read a new parameter (e.g., *PrioritizationForAI-r17*) to determine if prioritized msg3 PUSCH is enabled or not.

After checking the information received from *SIB1*, a high priority UE can know if prioritized Msg3 PUSCH is enabled or not. According to embodiments, a prioritized Msg3 PUSCH transmission can mean a higher transmit power for Msg3 PUSCH transmitted from high priority UEs. Therefore, if prioritized Msg3 PUSCH is enabled by the network, a high priority UE may further derive the transmit power for its Msg3 transmission. In an embodiment, the transmit power for prioritized Msg3 PUSCH is derived at the UE by applying a different interpretation of the "TPC command for PUSCH" field of the corresponding RAR grant, where the different interpretation of the "TPC command for PUSCH" field can be enabled using different mechanisms.

For example, the legacy Msg3 PUSCH TPC command table can be reused for prioritized Msg3 PUSCH. In this example, a UE applies an offset to the values indicated in the legacy TPC command table when deriving the transmit power for prioritized Msg3 PUSCH. This could include where the offset value is fixed in the standard, e.g., 4dB, or where the offset value is indicated by a new parameter added in the field *ra-PrioritizationForAccessIdentity* or the *RACH-*

*ConfigCommon* IE in SIB1. In embodiments, the new parameter can consist of two bits, pointing to four different offset values. In this instance, the network node could select which offset value to use based on the predicted high priority UE location information, network traffic information, etc.

Table H shows the legacy TPC command table specified for Msg3 PUSCH transmission (Table 8.2-2 in 38.213), including TPC Command $\delta_{msg\,2,b,f,c}$ for PUSCH.

TABLE H

| TPC Command | Value (in dB) |
|---|---|
| 0 | -6 |
| 1 | -4 |
| 2 | -2 |
| 3 | 0 |
| 4 | 2 |
| 5 | 4 |
| 6 | 6 |
| 7 | 8 |

In certain aspects, a new or modified TPC command table can be defined for prioritized Msg3 PUSCH. As an example, a new table, Table I below, can be added for high priority UEs to use.

TABLE I

| TPC Command | Value for prioritized Msg3 PUSCH (in dB) |
|---|---|
| 0 | -3 |
| 1 | 0 |
| 2 | 3 |
| 3 | 4 |
| 4 | 6 |
| 5 | 8 |
| 6 | 10 |
| 7 | 12 |

In another embodiment, the transmit power for prioritized Msg3 PUSCH is signaled to a UE by using a new RRC parameter introduced in *SIB1*. As an example, a new parameter, *ra-Prioritization-msg3-DeltaPreamble*, can be added in the field *ra-PrioritizationforAccessIdentity* in the *RACH-ConfigCommon IE* in SIB1. This new parameter may indicate a power offset between prioritized Msg3 PUSCH and PRACH preamble transmission. The legacy parameter, *ra-PrioritizationForAI-r16*, is a 2-bit bitmap, which is also used to indicate whether Access Identity 1 (for UEs configured with multimedia priority services), or Access Identity 2 (for UEs configured with mission critical services) are enabled for prioritized *msg3 PUSCH* or not. For example:

```
[[
    ra-PrioritizationForAccessIdentity       SEQUENCE {
        ra-Prioritization-r16                    RA-Prioritization,
        ra-PrioritizationForAI-r16               BIT STRING (SIZE (2)),
        ra- Prioritization-msg3-DeltaPreamble  INTEGER (-1..6)

    }
OPTIONAL     -- Need R
    ]]
```

Aspects of the disclosure may also be applied with respect to a 2-step random access procedure. That is, similar methods can be used for a UE to have prioritized MsgA PUSCH transmission.

In an embodiment, a new UE behavior is defined for a 2-step random access procedure such that if the parameter *ra-PrioritizationForAI-r16* is present in *ra-PrioritizationForAccessIdentityTwoStep-r16* in *RACH-ConfigCommonTwoStepRA IE* in *SIB1*, it indicates that a prioritized MsgA PUSCH is enabled for UEs configured with the Access Identity 1 and/or 2.

In another embodiment, a new parameter similar to *ra-PrioritizationForAI-r16*, e.g., *ra-PrioritizationForAI-r17*, is introduced in the field *ra-PrioritizationforAccessIdentityTwoStep-r16* in the *RACH-ConfigCommonTwoStepRA IE* in *SIB1*. A UE behavior is defined for a 2-step random access procedure such that if the new parameter is present, then, it at least indicates that a prioritized MsgA PUSCH is enabled for UEs configured with the Access Identity 1 and/or 2.

According to embodiments, after checking the information received from *SIB1*, a high priority UE knows if prioritized MsgA PUSCH is enabled or not. If prioritized MsgA PUSCH is enabled by the network, a high priority UE can further derive the transmit power for its MsgA transmission.

In another embodiment, a dedicated TPC command is configured in CFRA with 2-step RA type for high priority UEs with similar methods discussed in previous embodiments on the TPC command for Msg3 PUSCH transmissions.

In another embodiment, the transmit power for prioritized MsgA PUSCH is signaled to a UE by using a new RRC parameter. As an example, a new parameter, *ra-Prioritization-msgA-DeltaPreamble,* is added in the field *ra-PrioritizationforAccessIdentityTwoStep-r16* in the *RACH-ConfigCommonTwoStepRA* IE. This new parameter indicates a power offset between prioritized Msg3 PUSCH and Msg3 PRACH preamble transmission. The legacy parameter, *ra-PrioritizationForAI-r16*, is a 2-bit bitmap, which is also used to indicate whether Access Identity 1 (for UEs configured with multimedia priority services), or Access Identity 2 (for UEs configured with mission critical services) are enabled for prioritized MsgA PUSCH or not. An example is provided below:

```
    ra-PrioritizationForAccessIdentityTwoStep-r16          SEQUENCE {
        ra-Prioritization-r16                                 RA-Prioritization
OPTIONAL, -- Need M
        ra-PrioritizationForAI-r16                            BIT STRING (SIZE (2))
OPTIONAL  -- Need M
        ra- Prioritization-msgA-DeltaPreamble                 INTEGER (-1..6)
OPTIONAL  -- Need M
    }       OPTIONAL, -- Need R
```

Differentiated transmit power for Msg3 PUSCH and/or MsgA PUSCH can also be controlled by a network node. The methods of this type, in some embodiments, require that the network node has the knowledge of UE priority when scheduling Msg3 PUSCH and/or MsgA PUSCH transmission.

In an embodiment, a new field is introduced in an RAR grant to indicate the TPC offset value for prioritized Msg3 PUSCH. When this field is configured, the legacy field "TPC command for PUSCH" and the new filed are used jointly for a UE to derive the transmit power for Msg3 PUSCH. As an example, and shown in Table J (with modified random access response grant), a new field *TPC offset for PUSCH with high priority* is included in the RAR grant, and a new table, Table K (TPC offset for PUSCH with high priority), is defined for mapping the bit values in the field to different offset values.

TABLE J

| RAR grant field | Number of bits |
|---|---|
| Frequency hopping flag | 1 |
| PUSCH frequency resource allocation | 14, for operation without shared spectrum channel access<br>12, for operation with shared spectrum channel access |
| PUSCH time resource allocation | 4 |
| MCS | 4 |
| TPC command for PUSCH | 3 |
| TPC offset for PUSCH with high priority | 2 |
| CSI request | 1 |

(continued)

| RAR grant field | Number of bits |
|---|---|
| ChannelAccess-CPext | 0, for operation without shared spectrum channel access<br>2, for operation with shared spectrum channel access |

TABLE K

| Field | Value (in dB) |
|---|---|
| 0 | 0 |
| 1 | 2 |
| 2 | 4 |
| 3 | 6 |

This method can allow a network node to configure the TPC offset value for each high priority UE individually; therefore, it can further optimize the Msg3 transmit power configuration for each individual UEs configured with high priority services. This method may include that the network node has the knowledge of the UE priority information when scheduling Msg3 transmission.

In an embodiment, the TPC command for Msg3 transmission from high priority UEs or services can be separately configured with one or more of the following: (i) a TPC command configured in the fallback RAR messages when a high priority UE fallbacks from a 2-step random access procedure to a 4-step random access procedure, which is used for the Msg3 transmissions after reception of the fallback RAR; (ii) a TPC command configured in RRC messages for high priority UEs or services; and (iii) a TPC command configured in the DCI for scheduling retransmission of Msg3. In one embodiment, a network node configures a high TPC command value in the RAR grant for scheduling the transmission of Msg3 PUSCH for a high priority UE. This can enable a network node to select a larger value of TPC command in Table H or I when scheduling Msg3 PUSCH for high priority UEs or services.

In one embodiment, a higher power ramping step and/or shorter backoff window are configured for Msg1 reattempts so that a higher power Msg3 and earlier Msg3 can be achieved. In another embodiment, a higher power ramping step and/or shorter backoff window are applied for MsgA PUSCH reattempts so that a higher power MsgA PUSCH and/or earlier MsgA PUSCH can be achieved. A higher power ramping and/or shorter backoff window (e.g., relative to non-priority UEs) can be configured in the field *ra-PrioritizationforAccessIdentity* in *the RACH-ConfigCommon* in *SIB1* by the node.

In one embodiment, a network configures a higher power offset value between MsgA/Msg3 PUSCH and the associated preamble for the transmission of a prioritized MsgA/Msg3 PUSCH. The configuration can be signaled, for instance, by using RRC signaling, introducing a new parameter in RAR grant, using an existing field in RAR grant, or DCI signaling when scheduling MsgA/Msg3 PUSCH retransmission.

According to embodiments, one or more prioritization approaches may be combined. For instance, one or more of the UE-side approaches may be combined with one or more of the approaches described with respect to knowledge and decision-making by the network. Similarly, solutions of a given type may also be combined. As another example, solutions described with respect to the foregoing approaches can be combined with other solutions described herein.

According to embodiments, for instance if a network node has the knowledge of the UE priority when scheduling Msg3 transmission, one or more methods can be applied to improve the reliability of Msg3 PUSCH for high priority UEs. Such methods may use one or more of transport block (TB) scaling, a low SE MCS table, and PI/2 BPSK enablement.

In an embodiment, a network node configures one or more of the following for the Msg3 or MsgA PUSCH transmission to improve the reliability for high priority UEs: (i) a lower transport block (TB) scaling factor to reduce the channel coding rate, and (ii) a low MCS index. In an embodiment, the low spectrum efficiency MCS table is used for Msg3 or MsgA PUSCH transmissions for high priority UEs. For instance, the MCS Table 5.1.3.1-3 in 38.213 V16.0.0 or Table D can be supported and can be configured for Msg3 or MsgA PUSCH for high priority UEs when transform precoding is disabled. When transform precoding is enabled, the MCS Table 6.1.4.1-1 in 38.213 V16.0.0 or Table E can be supported and can be configured for Msg3 or MsgA PUSCH for high priority UEs. In an embodiment, PI/2 BPSK is enabled for Msg3 or MsgA PUSCH transmissions for high priority UEs.

According to some embodiments, repetition may be used. For instance, Msg3 or MsgA PUSCH repetition can be used to improve reliability, and enhance the coverage for Msg3 or MsgA PUSCH transmissions from higher priority UE(s).

In an embodiment, a Msg3 PUSCH or MsgA PUSCH for a high priority UE(s) is configured with repetition. Different signaling methods can be used for a network node to indicate the repetition to a UE. In one variant of the embodiment, a parameter is added in RRC signaling to indicate the Msg3 or MsgA PUSCH repetition factor for higher priority UEs or UEs in high priority services. For example, for 4-step RACH, a new RRC parameter, *ra-Msg3PUSCHRepetition,* is added within the field *ra-PrioritizationforAccessIdentity* in *the RACH-ConfigCommon* in *SIB1.* The parameter, *ra-PrioritizationForAI-r16*, in the *field ra-PrioritizationforAccessIdentity* is a 2-bit bitmap, which indicates whether Access Identity 1 (for UEs configured with multimedia priority services), or Access Identity 2 (for UEs configured with mission critical services) are enabled. When the field is present in *SIB1*, it indicates that Msg3 repetition for UEs configured with the Access Identity 1 and/or 2 is enabled for that network node.

A *RACH-ConfigCommon* information element is illustrated below:

```
-- ASN1START
-- TAG-RACH-CONFIGCOMMON-START

RACH-ConfigCommon ::=               SEQUENCE {
    rach-ConfigGeneric                  RACH-ConfigGeneric,
    totalNumberOfRA-Preambles           INTEGER (1..63)
OPTIONAL,    -- Need S
    ssb-perRACH-OccasionAndCB-PreamblesPerSSB    CHOICE {
        oneEighth                           ENUMERATED
{n4,n8,n12,n16,n20,n24,n28,n32,n36,n40,n44,n48,n52,n56,n60,n64},
```

```
        oneFourth                               ENUMERATED
{n4,n8,n12,n16,n20,n24,n28,n32,n36,n40,n44,n48,n52,n56,n60,n64},
        oneHalf                                 ENUMERATED
{n4,n8,n12,n16,n20,n24,n28,n32,n36,n40,n44,n48,n52,n56,n60,n64},
        one                                     ENUMERATED
{n4,n8,n12,n16,n20,n24,n28,n32,n36,n40,n44,n48,n52,n56,n60,n64},
        two                                     ENUMERATED
{n4,n8,n12,n16,n20,n24,n28,n32},
        four                                    INTEGER (1..16),
        eight                                   INTEGER (1..8),
        sixteen                                 INTEGER (1..4)
    }
OPTIONAL,    -- Need M

    groupBconfigured                    SEQUENCE {
        ra-Msg3SizeGroupA                   ENUMERATED {b56, b144, b208, b256, b282,
b480, b640,
                                                b800, b1000, b72, spare6,
spare5,spare4, spare3, spare2, spare1},
        messagePowerOffsetGroupB            ENUMERATED { minusinfinity, dB0, dB5, dB8,
dB10, dB12, dB15, dB18},
        numberOfRA-PreamblesGroupA          INTEGER (1..64)
    }
OPTIONAL,    -- Need R
    ra-ContentionResolutionTimer            ENUMERATED { sf8, sf16, sf24, sf32, sf40,
sf48, sf56, sf64},
    rsrp-ThresholdSSB                       RSRP-Range
OPTIONAL,    -- Need R
    rsrp-ThresholdSSB-SUL                   RSRP-Range
OPTIONAL,    -- Cond SUL
    prach-RootSequenceIndex                 CHOICE {
        l839                                    INTEGER (0..837),
        l139                                    INTEGER (0..137)
    },
    msg1-SubcarrierSpacing                  SubcarrierSpacing
OPTIONAL,      -- Cond L139
    restrictedSetConfig                     ENUMERATED {unrestrictedSet,
restrictedSetTypeA, restrictedSetTypeB},
    msg3-transformPrecoder                  ENUMERATED {enabled}
OPTIONAL,    -- Need R
    ...,
    [[
    ra-PrioritizationForAccessIdentity      SEQUENCE {
        ra-Prioritization-r16                   RA-Prioritization,
        ra-PrioritizationForAI-r16              BIT STRING (SIZE (2))
      ra-Msg3PUSCHRepetition                ENUMERATED (n2, n4)
    }
OPTIONAL      -- Need R
    ]]
```

For the example, in 2-step RACH similar signaling *ra-MsAPUSCHRepetition* can be included in *ra-PrioritizationForAccessIdentityTwoStep* in *RACH-ConfigCommonTwoStepRA* IE to indicate the repetition factor of MsgA PUSCH.

```
-- ASN1START
-- TAG-RACH-CONFIGCOMMONTWOSTEPRA-START

RACH-ConfigCommonTwoStepRA-r16 ::=                      SEQUENCE {
```

```
    rach-ConfigGenericTwoStepRA-r16                         RACH-ConfigCommonTwoStepRA-r16,
    msgA-TotalNumberOfRA-Preambles-r16                      INTEGER (1..63)
OPTIONAL, -- Need S
    msgA-SSB-PerRACH-OccasionAndCB-PreamblesPerSSB-r16      CHOICE {
        oneEighth                                               ENUMERATED
{n4,n8,n12,n16,n20,n24,n28,n32,n36,n40,n44,n48,n52,n56,n60,n64},
        oneFourth                                               ENUMERATED
{n4,n8,n12,n16,n20,n24,n28,n32,n36,n40,n44,n48,n52,n56,n60,n64},
        oneHalf                                                 ENUMERATED
{n4,n8,n12,n16,n20,n24,n28,n32,n36,n40,n44,n48,n52,n56,n60,n64},
        one                                                     ENUMERATED
{n4,n8,n12,n16,n20,n24,n28,n32,n36,n40,n44,n48,n52,n56,n60,n64},
        two                                                     ENUMERATED
{n4,n8,n12,n16,n20,n24,n28,n32},
        four                                                    INTEGER (1..16),
        eight                                                   INTEGER (1..8),
        sixteen                                                 INTEGER (1..4)
    }
OPTIONAL, -- Cond 2StepOnly
    msgA-CB-PreamblesPerSSB-PerSharedRO-r16                 INTEGER (1..60)
OPTIONAL, -- Cond SharedRO
    msgA-SSB-SharedRO-MaskIndex-r16                         INTEGER (1..15)
OPTIONAL, -- Need S
    groupB-ConfiguredTwoStepRA-r16                          GroupB-ConfiguredTwoStepRA-r16
OPTIONAL, -- Need S
    msgA-PRACH-RootSequenceIndex-r16                        CHOICE {
        l839                                                    INTEGER (0..837),
        l139                                                    INTEGER (0..137)
    }
OPTIONAL, -- Cond 2StepOnly
    msgA-RSRP-Threshold-r16                                 RSRP-Range
OPTIONAL, -- Cond 2Step4Step
    msgA-RSRP-ThresholdSUL-r16                              RSRP-Range
OPTIONAL, -- Cond 2StepSUL
    msgA-RSRP-ThresholdSSB-r16                              RSRP-Range
OPTIONAL, -- Need S
    msgA-RSRP-ThresholdSSB-SUL-r16                          RSRP-Range
OPTIONAL, -- Cond 2StepSUL
    msgA-SubcarrierSpacing-r16                              SubcarrierSpacing
OPTIONAL, -- Cond 2StepOnlyL139
    msgA-RestrictedSetConfig-r16                            ENUMERATED {unrestrictedSet,
restrictedSetTypeA,
                                                                         restrictedSetTypeB}
OPTIONAL, -- Cond 2StepOnly
    ra-PrioritizationForAccessIdentityTwoStep-r16          SEQUENCE {
        ra-Prioritization-r16                                   RA-Prioritization
OPTIONAL, -- Need M
        ra-PrioritizationForAI-r16                              BIT STRING (SIZE (2))
OPTIONAL  -- Need M
        ra-MsAPUSCHRepetition                              ENUMERATED (n2, n4)
    }
OPTIONAL, -- Need R
    ra-ContentionResolutionTimer-r16                       ENUMERATED {sf8, sf16, sf24,
sf32, sf40, sf48, sf56, sf64} OPTIONAL, -- Cond 2StepOnly
    ...
}

GroupB-ConfiguredTwoStepRA-r16 ::=                         SEQUENCE {
    ra-MsgA-SizeGroupA                                     ENUMERATED {b56, b144, b208,
b256, b282, b480, b640, b800,
                                                                         b1000, b72, spare6,
spare5, spare4, spare3, spare2, spare1} OPTIONAL, -- Need M
```

```
    messagePowerOffsetGroupB                         ENUMERATED {minusinfinity, dB0,
dB5, dB8, dB10, dB12, dB15, dB18}   OPTIONAL, -- Need M
    numberofRA-PreamblesGroupA                       INTEGER (1..64)
}


-- TAG-RACH-CONFIGCOMMONTWOSTEPRA-STOP
-- ASN1STOP
```

In another variant of the embodiment, a repetition factor is signaled via the "PUSCH time resource allocation" to indicate a row of the time domain resource allocation list (table) where a repetition is included. Table L shows an RAR grant content field size.

TABLE L

| RAR grant field | Number of bits |
|---|---|
| Frequency hopping flag | 1 |
| PUSCH frequency resource allocation | 14, for operation without shared spectrum channel access<br>12, for operation with shared spectrum channel access |
| PUSCH time resource allocation | 4 |
| MCS | 4 |
| TPC command for PUSCH | 3 |
| CSI request | 1 |
| ChannelAccess-CPext | 0, for operation without shared spectrum channel access<br>2, for operation with shared spectrum channel access |

In another variant of the embodiment, a repetition factor is signaled in the random access messages for Msg3 transmissions from high priority UEs. For example, a "Push Repetition Factor" can be included in the RAR UL grant, which indicates a repetition of Msg3 PUSCH, which can be no repetition, 2 repetitions, or 4 repetitions, for example. Table M shows an RAR grant content field size.

TABLE M

| RAR grant field | Number of bits |
|---|---|
| Frequency hopping flag | 1 |
| PUSCH frequency resource allocation | 14, for operation without shared spectrum channel access<br>12, for operation with shared spectrum channel access |
| PUSCH time resource allocation | 4 |
| MCS | 4 |
| TPC command for PUSCH | 3 |
| CSI request | 1 |
| ChannelAccess-CPext | 0, for operation without shared spectrum channel access<br>2, for operation with shared spectrum channel access |
| PUSCH repetition factor | 2 |

In another variant of the embodiment, an RRC parameter in *SIB1* together with a field in DCI format 1_0 are used to configure Msg3 or MsgA PUSCH repetition. In another variant of the embodiment, a repetition field is added in the DCI format 1_0 with CRC scrambled TC-RNTI for the repetition configuration for Msg3 PUSCH retransmissions. In another variant of the embodiment, a repetition field is added in the DCI format 1_0 with CRC scrambled RA-RNTI and/or MsgB-RNTI for Msg3 or MsgA PUSCH repetition configuration.

According to embodiments, and in certain aspects, repetition of transmission increases the chances of a successful connection between a high priority UE and node. This may be, for instance, by increasing the chances that a gNB can successfully decode a Msg3. For example, repetition may comprise a node scheduling (e.g., via an UL grant) multiple PUSCHs transmitted on multiple time occasions, such as in multiple consecutive time slots. The node can then detect the UL data using these multiple PUSCHs (e.g., by coherent/no-coherent combing of these multiple copies of the data). A benefit of this approach is that a Msg3 of high priority users can be transmitted in a fast and reliable way. This may be especially useful when high priority users are located in a coverage-limited area (e.g., cell-edge, rural or indoor), and one PUSCH transmission is insufficient to enable the network node to successfully decode the data carried on the PUSCH. Aspects of proposed solutions can also enable prioritized/more-robust Msg3 transmission for a high priority user compared to a normal user when the two users are scheduled with their Msg3 transmissions on the same PUSCH resources (e.g., contention).

With a method that includes signaling in DCI instead of having it in RAR, the RAR message size can be kept the same. As an example, a 2-bit field "RepetitionFactorPUSCH" can be used to signal no repetition, or a repetition of 2, 4, 8 PUSCH transmissions, for Msg3 or MsgA PUSCH.

In certain aspects, information is transmitted by way of the DCI format 1_0 with CRC scrambled by RA-RNTI or msgB-RNTI. For example, one or more of the following information may be transmitted:

Frequency domain resource assignment $-\left\lceil \log_2(N_{RB}^{DL,BWP}(N_{RB}^{DL,BWP}+1)/2) \right\rceil$ bits, where $N_{RB}^{DL,BWP}$ is the size of CORESET 0 if CORESET 0 is configured for the cell and $N_{RB}^{DL,BWP}$ is the size of initial DL bandwidth part if CORESET 0 is not configured for the cell;

Time domain resource assignment - 4 bits as defined in Clause 5.1.2.1 of [TS 38.214]; VRB-to-PRB mapping - 1 bit according to Table G;

Modulation and coding scheme - 5 bits as defined in Clause 5.1.3 of [TS 38.214], using Table B; RepetitionFactor-PUSCH - 2 bits;

TB scaling - 2 bits as defined in Clause 5.1.3.2 of [6, TS 38.214];

LSBs of SFN - 2 bits for the DCI format 1_0 with CRC scrambled by msgB-RNTI, or 2 bits as defined in Clause 8 of [5, TS 38.213] for operation in a cell with shared spectrum channel access; 0 bit otherwise; and/or

Reserved bits - 14 bits for the DCI format 1_0 with CRC scrambled by msgB-RNTI or for operation in a cell with shared spectrum channel access (otherwise 16 bits).

According to some embodiments, CP extension and/or channel access type is configured for MsgA or Msg3 PUSCH transmissions from high priority UEs or services. In NR-U, the LBT time can be critical to get resources for transmission. CP extension can improve the chance that MsgA PUSCH and MsgA PRACH are as close as possible so that a single LBT can be possible for the UE to transmit both the MsgA PRACH and MsgA PUSCH. A high priority channel access type with shorter LBT duration can improve the chances that a UE will get a channel for transmissions. Thus, and according to embodiments, for high priority UEs or services, a MsgA and Msg3 PUSCH CP extension and shorter LBT time can be configured or otherwise enabled to improve the fast PUSCH transmissions.

In an embodiment, MsgA PUSCH for a high priority UE(s) is configured or enabled with CP extension and/or shorter LBT duration. In one variant of the embodiment, CP extension and channel access type in *SIB1* is configured for MsgA PUSCH in contention based random access. In certain aspects, when a priority UE is detected, a CP extension can be enabled to reduce the number LBTs needed for 2-step random access.

As an example, a 2 *bit ChannelAccess-CPext* field for MsgA PUSCH can be included in *SIB1*, e.g. in *RACH-ConfigCommonTwoStepRA* IE and is interpreted with Table N, shown below. Aspects of channel access type can be defined in clause 4.2.1.2 of 37.213.

TABLE N

| Bit field mapped to index | Channel Access Type | CP extension |
|---|---|---|
| 0 | Type2C-ULChannelAccess | C2*symbol length - 16 us - TA |
| 1 | Type2A-ULChannelAccess | C3 *symbol length - 25 us - TA |
| 2 | Type2A-ULChannelAccess | C1*symbol length - 25 us |
| 3 | Type1-ULChannelAccess | 0 |

In another variant of the embodiment, CP extension and channel access type are configured in dedicated RRC signaling for MsgA PUSCH in contention free random access.

When a priority UE is detected, a CP extension can be enabled to reduce the number LBTs needed for 2-step random access. As an example, a 2 bit *ChannelAccess-CPext* field for MsgA PUSCH can be included *in RACH-Con-*

*figDedicated* IE and interpreted with Table N. In an embodiment, Msg3 PUSCH for a high priority UE(s) is configured with CP extension and/or shorter LBT duration. For operation in an unlicensed band, the channel access type and CP extension can be configured in RAR (3GPP TS38.213 section 8.2) for initial Msg3 transmissions and in DCI with CRC scrambled by TC-RNTI (3GPP TS38.212 section 7.3.1.1.1) for retransmissions of Msg3.

When a high priority UE is detected, the network can enable a proper CP extension and channel access type so that a short LBT is needed for fast channel access.

In an embodiment, a fixed CP extension configuration and channel access type is always assumed for MsgA or Msg3 PUSCH for high priority UEs. For instance, a fixed CP extension configuration and channel access type can be assumed for MsgA or Msg3 PUSCH for high priority UEs so that a short LBT time is used and a long CP extension is always configured.

According to embodiments, a network node can combine one or more of the embodiments in the foregoing methods to support prioritized, fast and robust Msg3 and/or MsgA PUSCH transmissions for a higher priority UE.

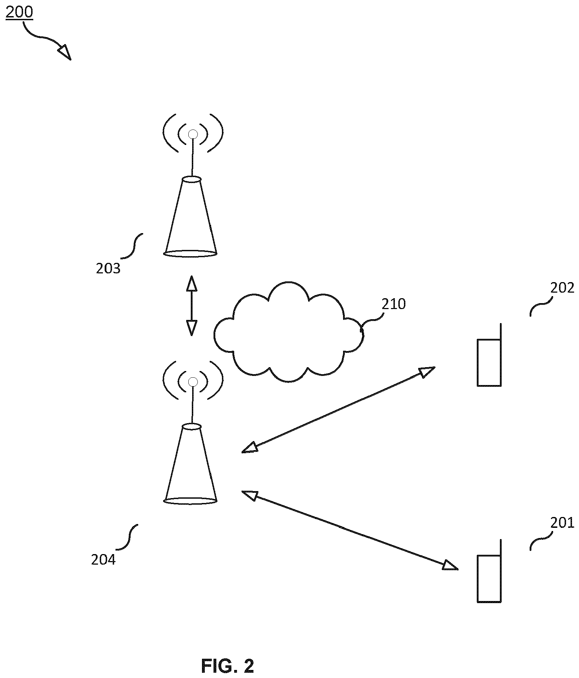

Referring now to FIG. 2, a communication system 200 is shown according to some embodiments. The system may, for instance, implement 5G new radio (NR) and include a first node 203, a second node 204, a first UE 201, and a second UE 202. The nodes may be, for instance, base stations, such as NBs, eNBs, gNBs or other types of wireless access points or network nodes. The UEs may be any form of UE according to embodiments, such as mobile telephones, personal digital assistants, electronic readers, portable electronic tablets, wireless sensors, machine communication devices, personal computers, and laptop computers. UEs 201 and 202 may communicate, for instance, with one or more of the nodes (e.g., node 204). The nodes may similarly communicate with each other. In some embodiments, one or more device has access to network 210.

In some embodiments, a node (e.g., gNB) 203, 204 can exchange messages with two UEs having different priority statuses. For instance, they may exchange messages as part of a random access procedure. In such embodiments, a first higher priority UE 201 may use differentiated transmit configurations (e.g., power configurations or other setups), while a second UE 202 (e.g., a standard UE) may use typical configurations. In certain aspects, the node 203, 204 may be able to differentiate the UEs' statuses and enable prioritized configurations accordingly. In other aspects, the node 203, 204 may not have knowledge of the relative statuses.

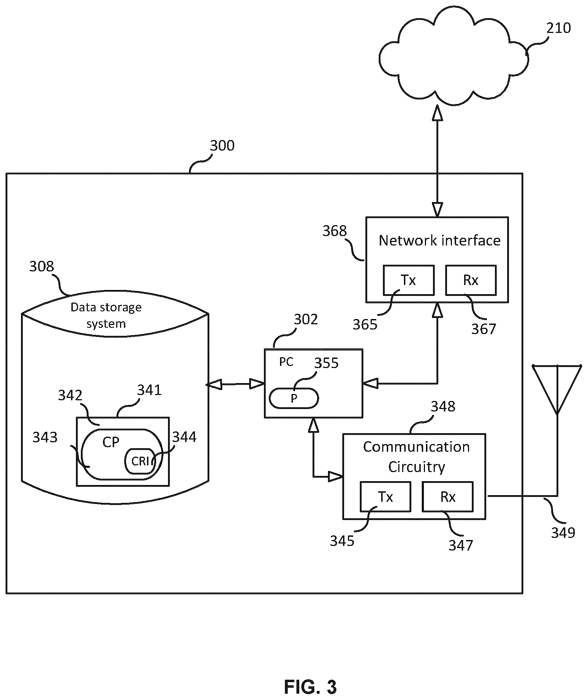

Referring now to FIG. 3, FIG. 3 is a block diagram of an apparatus 300 (e.g., a network node such as nodes 203, 204), according to some embodiments. As shown in FIG. 3, apparatus 300 may comprise: processing circuitry (PC) 302, which may include one or more processors (P) 355 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (*i.e.*, apparatus 300 may be a distributed computing apparatus); a network interface 368 comprising a transmitter (Tx) 365 and a receiver (Rx) 367 for enabling apparatus 300 to transmit data to and receive data from other nodes connected to a network 210 (e.g., an Internet Protocol (IP) network) to which network interface 368 is connected; communication circuitry 348, which is coupled to an antenna arrangement 349 comprising one or more antennas and which comprises a transmitter (Tx) 345 and a receiver (Rx) 347 for enabling apparatus 300 to transmit data and receive data (e.g., wirelessly transmit/receive data); and a local storage unit (a.k.a., "data storage system") 308, which may include one or more non-volatile storage devices and/or one or more volatile storage devices. In embodiments where PC 302 includes a programmable processor, a computer program product (CPP) 341 may be provided. CPP 341 includes a computer readable medium (CRM) 342 storing a computer program (CP) 343 comprising computer readable instructions (CRI) 344. CRM 342 may be a non-transitory computer readable medium, such as, magnetic media (e.g., a hard disk), optical media, memory devices (e.g., random access memory, flash memory), and the like. In some embodiments, the CRI 344 of computer program 343 is configured such that when executed by PC 302, the CRI causes apparatus 300 to perform steps described herein (e.g., steps described herein with reference to the flow charts). In other embodiments, apparatus 300 may be configured to perform steps described herein without the need for code. That is, for example, PC 302 may consist merely of one or more ASICs. Hence, the features of the embodiments described herein may be implemented in hardware and/or software.

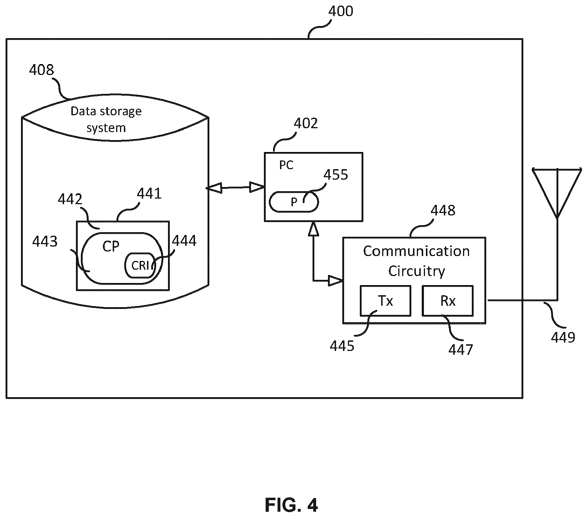

Referring now to FIG. 4, FIG. 4 is a block diagram of a device (e.g., a UE such as UEs 201, 202), according to some embodiments. As shown in FIG. 4, UE 201, 202 may comprise: processing circuitry (PC) 402, which may include one or more processors (P) 455 (e.g., one or more general purpose microprocessors and/or one or more other processors, such as an application specific integrated circuit (ASIC), field-programmable gate arrays (FPGAs), and the like); communication circuitry 448, which is coupled to an antenna arrangement 449 comprising one or more antennas and which comprises a transmitter (Tx) 445 and a receiver (Rx) 447 for enabling UE 201, 2020 to transmit data and receive data (e.g., wirelessly transmit/receive data); and a local storage unit (a.k.a., "data storage system") 408, which may include one or more non-volatile storage devices and/or one or more volatile storage devices. In embodiments where PC 402 includes a programmable processor, a computer program product (CPP) 441 may be provided. CPP 441 includes a computer readable medium (CRM) 442 storing a computer program (CP) 443 comprising computer readable instructions (CRI) 444. CRM 442 may be a non-transitory computer readable medium, such as, magnetic media (e.g., a hard disk), optical media, memory devices (e.g., random access memory, flash memory), and the like. In some embodiments, the CRI 444 of computer program 443 is configured such that when executed by PC 402, the CRI causes UE 201, 202 to perform steps described herein (e.g., steps described herein with reference to the flow charts). In other embodiments, UE 201, 202 may be configured to perform steps described herein without the need for code. That is, for example, PC 402 may consist merely of one or more ASICs. Hence, the features of the embodiments described herein may be implemented in hardware and/or software.

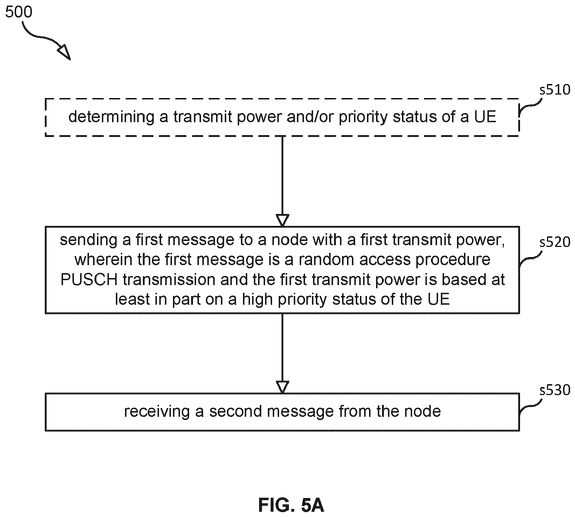

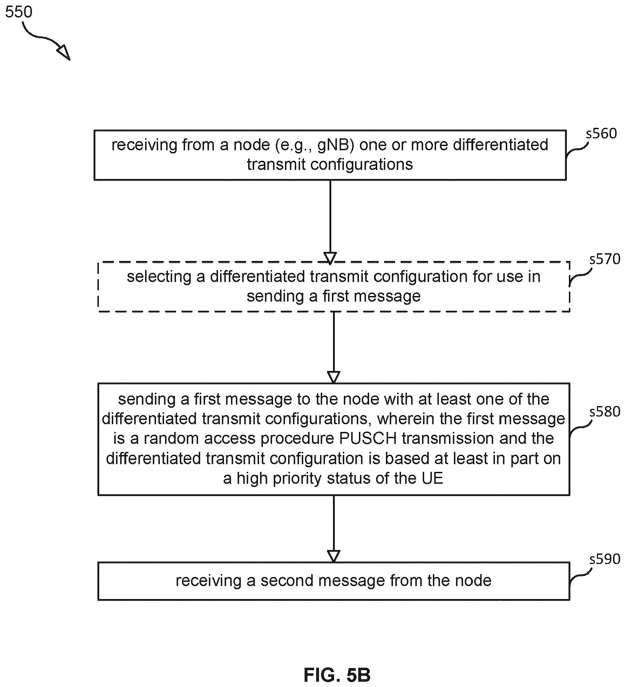

Referring now to FIGs. 5A and 5B, one or more methods are provided for a device (e.g., UE) to perform messaging with a node (e.g. a gNB) using differentiated transmission power or other transmission configurations based on the UE's status. For instance, the methods may be used where a UE is associated with an essential public safety service (e.g., mission critical services such as mission critical push-to-talk, mission critical data, or mission critical video for fire-fighters, police, or emergency medical service providers).

FIG. 5A illustrates a process 500 according to some embodiments. The process may be performed, for instance, by a UE 201, 202 as part of a random access procedure (e.g., a 2- or 4-step procedure) with a node, such as node 203, 204 in system 200.

Process 500 may begin with step s510, which may be optional in some embodiments. In step s510, a transmit power and/or priority status of the UE is determined. For instance, the UE may determine that it has a high priority status, and may further select a transmit power based on that status. For instance, the UE may be enabled to use an increased transmit power if it is a high priority device.

In step s520, the UE sends a first message to a node (e.g., gNB) with a first transmit power, wherein the first message is a random access procedure PUSCH transmission and the first transmit power is based at least in part on a high priority status of the UE. For instance, the transmit power of step s520 may be based on the determination of step s510. In some embodiments, the determining the UE status and/or first transmit power is based at least in part on an access identity (e.g., provisioned/stored in the SIM/USIM of the UE) and/or access category of the UE (e.g., associated with the UE's service type). In some embodiments, the determining the UE status and/or first transmit power is based at least in part on receipt of a parameter indicating that an access identity of the UE (e.g., access identity 1 and/or 2) is enabled for prioritized transmission of the first message (e.g., Msg3 or MsgA).

In step s530, the UE receives a second message from the node. In some embodiments, the process 500 may be part of a 4-step random access procedure, the first message a Msg3, and the second message a Msg4. In some embodiments, the process 500 may be part of a 2-step random access procedure, where the first message is a MsgA and the second message is a MsgB

FIG. 5B illustrates a process 550 according to some embodiments. The process may be performed, for instance, by a UE 201, 202 as part of a random access procedure (e.g., a 2- or 4-step procedure) with a node, such as node 203, 204 in system 200.

Process 550 may begin with step s560. In step s560, the UE receives one or more differentiated transmit configurations from a node (e.g., gNB). According to embodiments, the differentiated transmit configurations, used for sending a first message, can be one or more of a repetition setting, ramping configuration, reduced transport block (TB) scaling factor, a low MCS index, use of a low spectrum efficiency MCS table (e.g., for Msg3 or MsgA PUSCH), and enabled P1/2 BPSK (e.g., for Msg3 or MsgA PUSCH), as examples.

In step s570, which may be optional in some embodiments, the UE selects one or more of the transmit configurations for use in sending a message.

In step s580, the UE sends a first message to the node using at least one of the differentiated transmit configurations. The first message may be a random access procedure PUSCH transmission, and the differentiated transmit configuration can be based at least in part on a high priority status of the UE (e.g., as selected in step s570).

In step s590, the UE receives a second message from the node. As with process 500, process 550 may also be part of a 2- or 4-step random access procedure in which one of more of Msg3, Msg4, MsgA, and MsgB are exchanged between the UE and node.

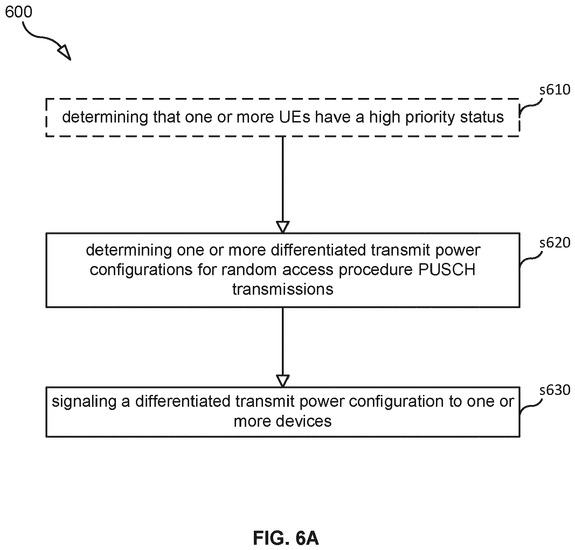

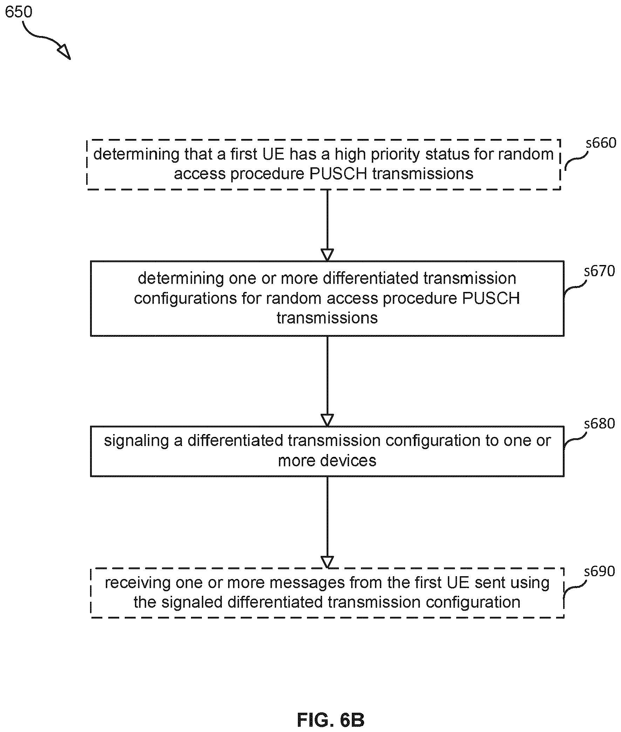

Referring now to FIGs. 6A and 6B, one or more methods are provided for a node (e.g., gNB) to perform messaging with a device (e.g., UE) using differentiated transmission power or other transmission configurations based on the UE's status. For instance, the methods may be used where a UE is associated with an essential public safety service (e.g., mission critical services such as mission critical push-to-talk, mission critical data, or mission critical video for fire-fighters, police, or emergency medical service providers). In some embodiments, the node may have knowledge of a specific UE's status. In other embodiments, the node may authorize (and receive) prioritized messaging without knowing any UE's specific priority. In some embodiments, the processes of FIGs. 6A and 6B are part of a 2- or 4-step random access procedure in which one of more of Msg3, Msg4, MsgA, and MsgB are exchanged between the UE and node.

FIG. 6A illustrates a process 600 according to some embodiments. The process may be performed, for instance, by a node 203, 204 as part of a random access procedure (e.g., a 2- or 4-step procedure) with a UE, such as UE 201, 202 in system 200.

The process may begin with step s610, which may be optional in some embodiments. In step s610, the node determines that one or more UEs have a high priority status. However, in some embodiments, process 600 may proceed without the node having knowledge of a UE's priority.

In step s620, the node determines one or more differentiated transmit power configurations for random access procedure PUSCH transmissions. The node may also determine whether such prioritized transmissions are enabled at a given time or in given cell (or other location). In embodiments where the node has knowledge of a specific UE's status (or a sub-category of UE status), the node may tailor/individualize the transmit power for those UEs.

In step s630, the node signals a differentiated transmit power to one or more UEs. In certain aspects, the differentiated power configurations are indicated to the UE based on UE priority status (e.g., based on or associated with access identity and/or access category of a UE). In certain aspects, differentiated configurations can be identified and selected by a UE based on its access identity and/or access category. In some embodiments, the signaling enables prioritized transmissions; however, prioritized transmissions may be separately enabled via other signaling (e.g., in broadcast information and/or via RRC). Similarly, different signaling may be used in conjunction by the UE to determine the appropriate transmission configuration for a given message.

FIG. 6B illustrates a process 650 according to some embodiments. The process may be performed, for instance, by a UE 201, 202 as part of a random access procedure (e.g., a 2- or 4-step procedure) with a node, such as node 203, 204 in system 200.

The process may begin with step s660, which may be optional in some embodiments. In step s660, the node determines that a first UE has a high priority status (e.g., for random access procedure PUSCH transmissions).

In step s670, the node determines one or more differentiated transmission configurations (e.g., for random access procedure PUSCH transmissions).

In step s680, the node signals a differentiated transmission configuration to one or more devices (e.g., to a first UE). According to embodiments, signaling the differentiated transmission configuration comprises one or more of: signaling a reduced transport block (TB) scaling factor, signaling a low MCS index, signaling use of a low spectrum efficiency MCS table (e.g., for Msg3 or MsgA PUSCH), and enabling P1/2 BPSK (e.g., for Msg3 or MsgA PUSCH). The signaling may also be related to one or more of repetition, ramping, and cyclic prefix extension configurations.

According to embodiments, the various differentiated transmission configurations can be linked to UE status, for instance, using access identity and/or access category.

In step s690, which may also be optional, the node receives one or more messages (including, e.g., Msg3 or MsgA) from the first UE, where the one or more messages were sent using the signaled differentiated transmission configuration.

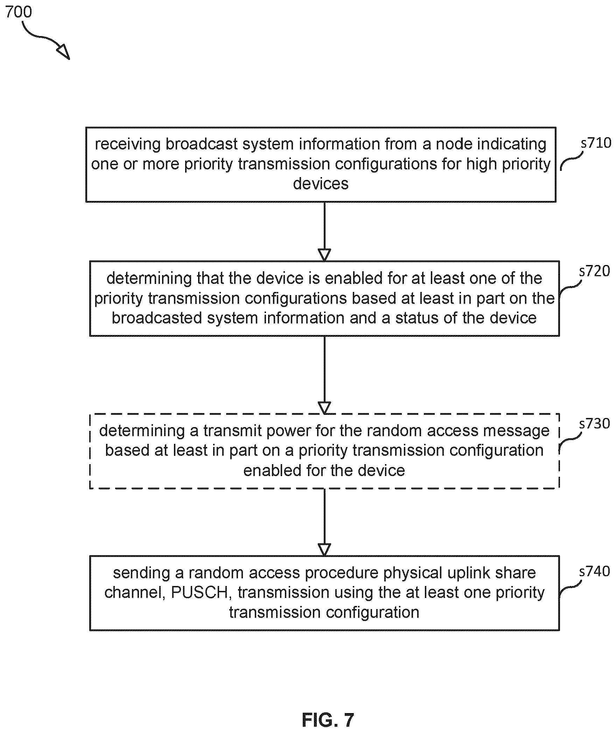

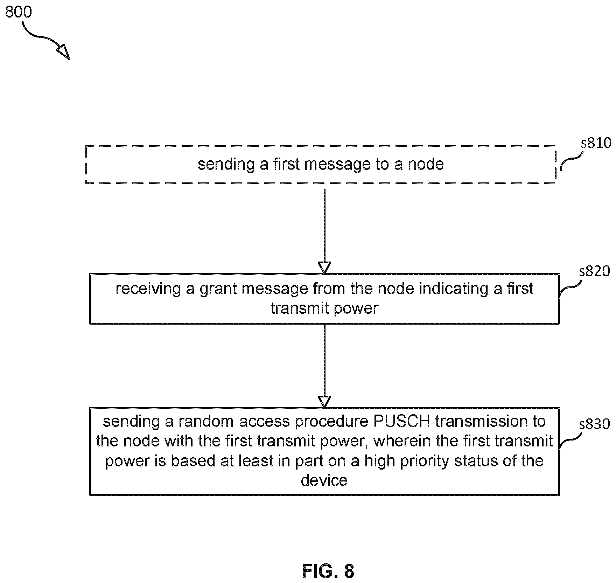

Referring now to FIGs. 7 and 8, one or more methods are provided for a device (e.g., UE) to perform messaging with a node (e.g. a gNB). According to embodiments, the methods 700, 800 may be used where a UE is associated with an essential public safety service (e.g., mission critical services such as mission critical push-to-talk, mission critical data, or mission critical video for fire-fighters, police, or emergency medical service providers). The processes of FIGs. 7 and 8 may be performed, for instance, by a UE 201, 202 as part of a random access procedure (e.g., a 2- or 4-step procedure) with a node, such as node 203, 204 in system 200.

FIG. 7 illustrates a process 700 according to some embodiments. The process 700 may begin with step s710. In step s710, the device receives broadcast system information from a node indicating one or more priority transmission configurations for high priority devices. In step s720, the device determines that it is enabled for at least one of the priority transmission configurations based at least in part on the broadcasted system information and a status of the device. In step s730, which may be optional in some embodiments, the device determines a transmit power for the random access message based at least in part on a priority transmission configuration enabled for the device. In step s740, the device sends a random access procedure physical uplink share channel, PUSCH, transmission using the at least one priority transmission configuration. In some embodiments, the random access procedure transmission is a Msg3 transmission sent as part of a 4-step random access procedure or a MsgA sent as part of a 2-step random access procedure.

FIG. 8 illustrates a process 800 according to some embodiments. The process 800 may begin with step s810, which may be optional in some embodiments. In step s810, the device sends a first message to a node. In step s820, the device receives a grant message from the node indicating a first transmit power. In step s830, the device sends a random access procedure PUSCH transmission to the node with the first transmit power, wherein the first transmit power is based at least in part on a high priority status of the device.

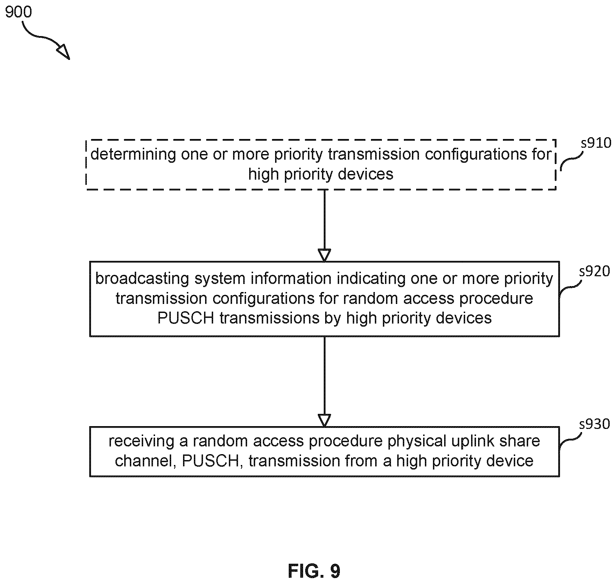

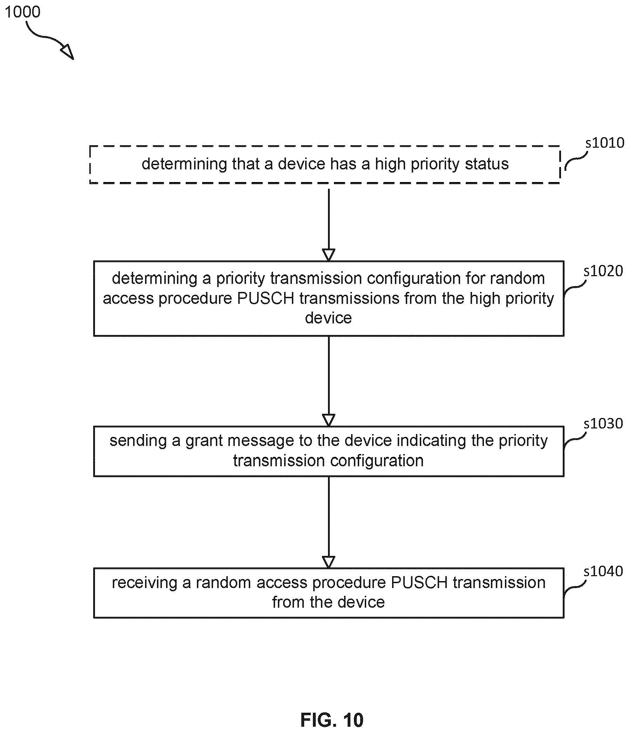

Referring now to FIGs. 9 and 10, one or more methods are provided for a node (e.g., gNB) to perform messaging with a device (e.g., UE). The process may be performed, for instance, by a node 203, 204 as part of a random access procedure (e.g., a 2- or 4-step procedure) with a UE, such as UE 201, 202 in system 200. According to embodiments, the methods 900, 1000 may be used where a UE is associated with an essential public safety service (e.g., mission critical services such as mission critical push-to-talk, mission critical data, or mission critical video for fire-fighters, police, or emergency medical service providers).

FIG. 9 illustrates a process 900 according to some embodiments. The process 900 may begin with step s910, which may be optional in some embodiments. In step s910, the node determines one or more priority transmission configurations for high priority devices. In step s920, the node broadcasts system information indicating one or more priority transmission configurations for random access procedure PUSCH transmissions by high priority devices. According to some embodiments, the broadcasted system information indicates prioritized transmission configurations for devices based on one or more of access identity and access category. In step s930, the node receives a random access procedure physical uplink share channel, PUSCH, transmission from a high priority device. In some embodiments, the received random access procedure transmission is a Msg3 transmission sent as part of a 4-step random access procedure or a MsgA sent as part of a 2-step random access procedure.

FIG. 10 illustrates a process 1000 according to some embodiments. The process may begin with step s1010, which may be optional in some embodiments. In step s1010, the node determines that a device has a high priority status. In step s1020, the node determines a priority transmission configuration for random access procedure PUSCH transmissions from the high priority device. According to some embodiments, determining one or more of the priority transmission configuration and device status is based at least in part on an access identity and/or access category of the device. In step s1030, the node sends a grant message to the device indicating the priority transmission configuration. In step s1040, the node receives a random access procedure PUSCH transmission from the device. In certain aspects, the priority transmission configuration comprises an indication of transmit power for random access procedure PUSCH transmissions.

## Claims

1. A method (700) for use in a device, the method comprising:

    receiving (710) broadcast system information from a node indicating one or more priority transmission configurations for high priority devices;
    determining (720) that the device is enabled for at least one of the priority transmission configurations based at least in part on the broadcasted system information and a status of the device, wherein the at least one priority transmission configuration indicates a transmit power for random access procedure physical uplink shared channel, PUSCH, transmissions by high priority devices; and
    sending (740) a random access procedure PUSCH transmission using the transmit power indicated by the at least one priority transmission configuration.

2. The method of claim 1, wherein the random access procedure transmission is a Msg3 transmission sent as part of a 4-step random access procedure or a MsgA sent as part of a 2-step random access procedure.

3. The method of claim 1 or 2, wherein the broadcasted system information indicates prioritized transmission configurations for devices based on one or more of access identity or access category, and the determining is based at least in part on one or more of an access identity or access category of the device.

4. The method of any of claims 1-3, further comprising:
    determining (730) the transmit power for the random access message based at least in part on the at least one priority transmission configuration enabled for the device.

5. The method of any of claims 1-4, wherein one or more of:

    (i) the indicated transmit power is greater for high priority devices than for other devices;
    (ii) the at least one configuration indicates a transmit power offset;
    (iii) the at least one configuration indicates a PUSCH transmit power offset relative to a preamble transmit power;
    (iv) a transmit power offset for the message is indicated by a parameter received in a system information block received from the node, wherein the parameter indicates a plurality of offsets and the transmit power is determined based on a value selection indicator; or
    (v) the transmit power is determined based at least in part on a TPC command for PUSCH in a random access response, RAR, grant received from the node.

6. The method of any of claims 1-5, wherein the at least one priority transmission configuration provides for one or more of:

    (i) a reduced transport block, TB, scaling factor;

(ii) a low MCS index;

(iii) a low spectrum efficiency MCS table;

(iv) P1/2 BPSK;

(v) a cyclic prefix, CP, extension;

(vi) a MsgA physical random access channel, PRACH, and PUSCH content in the same LBT;

(vii) extended CP and a shortened LBT; or

(viii) differentiated ramping characteristics for high priority devices.

**7.** The method of any of claims 1-6, wherein:

(i) the at least one priority transmission configuration configures the device for repetition;

(ii) a repetition factor is signalled to the device via a parameter in radio resource control, RRC, in the PUSCH time resource allocation field of a RAR uplink grant;

(iii) a repetition factor is signalled to the device via a specified parameter in a RAR uplink grant;

(iv) a repetition factor is signalled to the device via an RRC parameter together with a field in DCI format 1_0; or

(v) a repetition factor is signalled to the device using a repetition field provided in a DCI format 1_0 or RAR with CRC scrambled TC-RNTI or RA-RNTI.

**8.** The method of any of claims 1-7, wherein the device is associated with an essential public safety service or a multimedia priority service.

**9.** The method of any of claims 1-8, wherein the at least one priority transmission configuration further indicates prioritization of PRACH transmission.

**10.** A method (800) for use in a device, the method comprising:

receiving (820) a grant message from a node indicating a first transmit power; and

sending (830) a random access procedure physical uplink shared channel, PUSCH, transmission to the node with the first transmit power, wherein the first transmit power is based at least in part on a high priority status of the device.

**11.** The method of claim 10, further comprising:

sending (810) a first message to the node,

wherein the grant message is an RAR grant responsive to the first message, and

wherein the first message is a Msg1 and the random access procedure PUSCH transmission is a Msg3 sent as part of a 4-step random access procedure.

**12.** The method of claim 10 or 11 wherein:

(i) the grant message indicates a power offset value for prioritized transmissions;

(ii) the grant message indicates an offset power relative to a preamble transmit power;

(iii) the first transmit power is signalled by a value in a TPC command field and/or a TPC offset field of the grant message; or

(iv) the first transmit power is indicated by a value in the grant message mapping to a table of transmit or offset power values for PUSCH transmissions from devices with high priority.

**13.** The method of any of claims 10-12, wherein the first transmit power is indicated by a TPC command configured in a fall-back RAR message, an RRC message for high priority UEs or services, or Downlink Control Information, DCI, for scheduling retransmission of Msg3.

**14.** A computer program comprising instructions which when executed by processing circuitry of an apparatus causes the apparatus to perform the method of any one of claims 1-9 or claims 10-13.

**15.** A carrier containing the computer program of claim 14, wherein the carrier is one of an electronic signal, an optical signal, a radio signal, and a computer readable storage medium.

**16.** A device (201, 202), the device being configured to:

receive broadcast system information from a node indicating one or more priority transmission configurations for high priority devices;

determine that the device is enabled for at least one of the priority transmission configurations based at least in part on the broadcasted system information and a status of the device, wherein the at least priority transmission configuration indicates a transmit power for random access procedure physical uplink shared channel, PUSCH, transmissions by high priority devices; and

send a random access procedure PUSCH transmission using the transmit power indicated by the at least one priority transmission configuration.

**17.** The device of claim 16, wherein the device is further configured to perform the steps of any of claims 2-9.

**18.** A device (201, 202), the device being configured to:

receive a grant message from a node indicating a first transmit power; and

send a random access procedure physical uplink shared channel, PUSCH, transmission to the node with the first transmit power, wherein the first transmit power is based at least in part on a high priority status of the device.

**19.** The device of claim 18, wherein the device is further configured to perform the steps of any of claims 11-13.

**Patentansprüche**

**1.** Verfahren (700) zur Verwendung in einer Vorrichtung, wobei das Verfahren Folgendes umfasst:

Empfangen (710) von Sendesysteminformationen von einem Knoten, die eine oder mehr Konfigurationen für prioritäre Übertragung für Vorrichtungen mit hoher Priorität angeben;

Bestimmen (720), dass die Vorrichtung für mindestens eine der Konfigurationen für prioritäre Übertragung freigegeben ist, zumindest teilweise basierend auf den gesendeten Systeminformationen und einem Status der Vorrichtung, wobei die mindestens eine Konfiguration für prioritäre Übertragung eine Sendeleistung für gemeinsame physische Uplink-Kanal-, PUSCH-, Übertragungen im Direktzugriffsverfahren durch Vorrichtungen mit hoher Priorität angibt; und

Senden (740) einer PUSCH-Übertragung im Direktzugriffsverfahren unter Verwendung der durch die mindestens eine Konfiguration für prioritäre Übertragung angegebenen Sendeleistung.

**2.** Verfahren nach Anspruch 1, wobei die Übertragung im Direktzugriffsverfahren eine Msg3-Übertragung, die als Teil eines vierstufigen Direktzugriffsverfahrens gesendet wird, oder eine MsgA, die als Teil eines zweitstufigen Direktzugriffsverfahrens gesendet wird, ist.

**3.** Verfahren nach Anspruch 1 oder 2, wobei die gesendeten Systeminformationen basierend auf einer oder mehr von einer Zugangsidentität oder Zugangskategorie Konfigurationen für prioritäre Übertragung für Vorrichtungen angeben und das Bestimmen mindestens teilweise auf einer oder mehr von einer Zugangsidentität oder Zugangskategorie der Vorrichtung basiert.

**4.** Verfahren nach den Ansprüchen 1-3, das ferner Folgendes umfasst:

Bestimmen (730) der Sendeleistung für die Direktzugriffsmitteilung, mindestens teilweise basierend auf der mindestens einen Konfiguration für prioritäre Übertragung, die für die Vorrichtung freigegeben ist.

**5.** Verfahren nach einem der Ansprüche 1-4, wobei eines oder mehr von Folgendem gilt:

(i) die angegebene Sendeleistung ist für Vorrichtungen mit hoher Priorität höher als für andere Vorrichtungen;

(ii) die mindestens eine Konfiguration gibt einen Sendeleistungsversatz an;

(iii) die mindestens eine Konfiguration gibt einen PUSCH-Sendeleistungsversatz relativ zu einer Präambel-Sendeleistung an;

(iv) ein Sendeleistungsversatz für die Mitteilung wird durch einen Parameter angegeben, der in einem Systeminformationsblock von dem Knoten empfangen wurde, wobei der Parameter eine Vielzahl von Versätzen angibt und die Sendeleistung basierend auf einem Wertauswahlindikator bestimmt wird; oder

(v) die Sendeleistung wird mindestens teilweise basierend auf einem TPC-Befehl für PUSCH ein einer Direktzugriffsantwort-, RAR-, Freigabe bestimmt, die von dem Knoten empfangen wurde.

**6.** Verfahren nach einem der Ansprüche 1-5, wobei die mindestens eine Konfiguration für prioritäre Übertragung eines oder mehr von Folgendem bereitstellt:

(i) einen reduzierten Transportblock-, TB-, Skalierungsfaktor;
(ii) einen niedrigen MCS-Index;
(iii) eine MCS-Tabelle für geringe Frequenzeffizienz;
(iv) P1/2 BPSK;
(v) eine Erweiterung für ein zyklisches Präfix (CP);
(vi) einen physischen Direktzugriffskanal, PRACH, für MsgA und PUSCH-Inhalte in dem gleichen LBT;
(vii) erweitertes CP und gekürztes LBT; oder
(viii) differenzierte Steigerungseigenschaften für Vorrichtungen mit hoher Priorität.

**7.** Verfahren nach einem der Ansprüche 1-6, wobei:

(i) die mindestens eine Konfiguration für prioritäre Übertragung die Vorrichtung für Wiederholung konfiguriert;
(ii) über einen Parameter in einer Funkressourcensteuerung, RRC, in dem Zuordnungsfeld für PUSCH-Zeitressourcen einer RAR-Uplink-Freigabe ein Wiederholungsfaktor an die Vorrichtung signalisiert wird;
(iii) über einen bestimmten Parameter in einer RAR-Uplink-Freigabe ein Wiederholungsfaktor an die Vorrichtung signalisiert wird;
(iv) über einen RRC-Parameter ein Wiederholungsfaktor an die Vorrichtung signalisiert wird, zusammen mit einem Feld im DCI-Format 1_0; oder
(v) unter Verwendung eines Wiederholungsfelds, das in einem DCI-Format 1_0 oder RAR mit CRC-verschlüsselten TC-RNTI oder RA-RNTI bereitgestellt wird, ein Wiederholungsfaktor an die Vorrichtung signalisiert wird.

**8.** Verfahren nach einem der Ansprüche 1-7, wobei die Vorrichtung mit einem essentiellen Dienst für öffentliche Sicherheit oder einem prioritären Multimediadienst assoziiert ist.

**9.** Verfahren nach einem der Ansprüche 1-8, wobei die mindestens eine Konfiguration für prioritäre Übertragung ferner eine Priorisierung der PRACH-Übertragung angibt.

**10.** Verfahren (800) zur Verwendung in einer Vorrichtung, wobei das Verfahren Folgendes umfasst:

Empfangen (820) einer Freigabemitteilung von einem Knoten, die eine erste Sendeleistung angibt; und
Senden (830) einer gemeinsamen physischen Uplink-Kanal-, PUSCH-, Übertragung im Direktzugriffsverfahren an den Knoten mit der ersten Sendeleistung, wobei die erste Sendeleistung mindestens teilweise auf einem Status hoher Priorität der Vorrichtung basiert.

**11.** Verfahren nach Anspruch 10, das ferner Folgendes umfasst:

Senden (810) einer ersten Mitteilung an den Knoten,
wobei die Freigabemitteilung eine RAR-Freigabe in Antwort auf die erste Mitteilung ist, und
wobei die erste Mitteilung eine Msg1 und die PUSCH-Übertragung im Direktzugriffsverfahren eine Msg3 ist, die als Teil eines vierstufigen Direktzugriffsverfahrens gesendet wird.

**12.** Verfahren nach Anspruch 10 oder 11, wobei:

(i) die Freigabemitteilung einen Leistungsversatzwert für priorisierte Übertragungen angibt;
(ii) die Freigabemitteilung eine Versatzleistung relativ zu einer Präambel-Sendeleistung angibt;
(iii) die erste Sendeleistung durch einen Wert in einem TPC-Befehlsfeld und/oder einem TPC-Versatzfeld der Freigabemitteilung signalisiert wird; oder
(iv) die erste Sendeleistung durch einen Wert in der Freigabemitteilung angegeben ist, der einer Tabelle von Sende- oder Versatzleistungswerten für PUSCH-Übertragungen von Vorrichtungen mit hoher Priorität zugeordnet wird.

**13.** Verfahren nach einem der Ansprüche 10-12, wobei die erste Sendeleistung durch einen TPC-Befehl angegeben ist, der in einer RAR-Rückfallmitteilung, einer RRC-Mitteilung für Benutzerendgeräte oder Dienste mit hoher Priorität oder Downlink-Steuerungsinformationen, DCI, zum Planen einer Neuübertragung von Msg3 konfiguriert ist.

**14.** Computerprogramm, das Anweisungen umfasst, die, wenn sie durch eine Verarbeitungsschaltung eines Geräts ausgeführt werden, das Gerät dazu veranlassen, das Verfahren nach einem der Ansprüche 1-9 oder der Ansprüche 10-13 durchzuführen.

**15.** Träger, der das Computerprogramm nach Anspruch 14 enthält, wobei der Träger eines von einem elektronischen Signal, einem optischen Signal, einem Funksignal und einem computerlesbaren Speichermedium ist.

**16.** Vorrichtung (201, 202), wobei die Vorrichtung zu Folgendem konfiguriert ist:

Empfangen von Sendesysteminformationen von einem Knoten, die eine oder mehr Konfigurationen für prioritäre Übertragung für Vorrichtungen mit hoher Priorität angeben;
Bestimmen, dass die Vorrichtung für mindestens eine der Konfigurationen für prioritäre Übertragung freigegeben ist, zumindest teilweise basierend auf den gesendeten Systeminformationen und einem Status der Vorrichtung, wobei die mindestens eine Konfiguration für prioritäre Übertragung eine Sendeleistung für gemeinsame physische Uplink-Kanal-, PUSCH-, Übertragungen im Direktzugriffsverfahren durch Vorrichtungen mit hoher Priorität angibt; und
Senden einer PUSCH-Übertragung im Direktzugriffsverfahren unter Verwendung der durch die mindestens eine Konfiguration für prioritäre Übertragung angegebenen Sendeleistung.

**17.** Vorrichtung nach Anspruch 16, wobei die Vorrichtung ferner dazu konfiguriert ist, die Schritte nach einem der Ansprüche 2-9 durchzuführen.

**18.** Vorrichtung (201, 202), wobei die Vorrichtung zu Folgendem konfiguriert ist:

Empfangen einer Freigabemitteilung von einem Knoten, die eine erste Sendeleistung angibt; und
Senden einer gemeinsamen physischen Uplink-Kanal-, PUSCH-, Übertragung im Direktzugriffsverfahren an den Knoten mit der ersten Sendeleistung, wobei die erste Sendeleistung mindestens teilweise auf einem Status hoher Priorität der Vorrichtung basiert.

**19.** Vorrichtung nach Anspruch 18, wobei die Vorrichtung ferner dazu konfiguriert ist, die Schritte nach einem der Ansprüche 11-13 durchzuführen.

**Revendications**

**1.** Procédé (700) destiné à être utilisé dans un dispositif, le procédé comprenant :

la réception (710) d'informations système de diffusion provenant d'un nœud indiquant une ou plusieurs configurations de transmissions prioritaires pour des dispositifs hautement prioritaires ;
la détermination (720) du fait que le dispositif est activé pour au moins l'une des configurations de transmissions prioritaires sur la base, au moins en partie, des informations système diffusées et d'un état du dispositif, dans lequel l'au moins une configuration de transmission prioritaire indique une puissance de transmission pour des transmissions de canal partagé de liaison montante physique, PUSCH, de procédure d'accès aléatoire par des dispositifs hautement prioritaires ; et
l'envoi (740) d'une transmission PUSCH de procédure d'accès aléatoire en utilisant la puissance de transmission indiquée par l'au moins une configuration de transmission prioritaire.

**2.** Procédé selon la revendication 1, dans lequel la transmission de procédure d'accès aléatoire est une transmission Msg3 envoyée dans le cadre d'une procédure d'accès aléatoire en 4 étapes ou un MsgA envoyé dans le cadre d'une procédure d'accès aléatoire en 2 étapes.

**3.** Procédé selon la revendication 1 ou 2, dans lequel les informations système diffusées indiquent des configurations de transmissions classées par priorité pour des dispositifs sur la base d'une ou plusieurs identités d'accès ou catégories d'accès, et la détermination est basée, au moins en partie, sur une ou plusieurs d'une identité d'accès ou d'une catégorie d'accès du dispositif.

**4.** Procédé selon l'une quelconque des revendications 1 à 3, comprenant en outre :
la détermination (730) de la puissance de transmission pour le message d'accès aléatoire sur la base, au moins en partie, de l'au moins une configuration de transmission prioritaire activée pour le dispositif.

5. Procédé selon l'une quelconque des revendications 1 à 4, dans lequel un ou plusieurs des faits suivants s'appliquent :

(i) la puissance de transmission indiquée est plus grande pour des dispositifs hautement prioritaires que pour d'autres dispositifs ;
(ii) l'au moins une configuration indique un décalage de puissance de transmission ;
(iii) l'au moins une configuration indique un décalage de puissance de transmission PUSCH par rapport à une puissance de transmission de préambule ;
(iv) un décalage de puissance de transmission pour le message est indiqué par un paramètre reçu dans un bloc d'informations système reçu du noeud, dans lequel le paramètre indique une pluralité de décalages et la puissance de transmission est déterminée sur la base d'un indicateur de sélection de valeur ; ou
(v) la puissance de transmission est déterminée sur la base, au moins en partie, d'une commande TPC pour un PUSCH dans un octroi d'une réponse d'accès aléatoire, RAR, reçue du noeud.

6. Procédé selon l'une quelconque des revendications 1 à 5, dans lequel l'au moins une configuration de transmission prioritaire prévoit l'un ou plusieurs parmi :

(i) un facteur d'échelle de bloc de transport, TB, réduit ;
(ii) un indice MCS faible ;
(iii) un tableau MCS à faible efficacité spectrale ;
(iv) une BPSK (modulation par déplacement de phase binaire) P1/2 ;
(v) une extension de préfixe cyclique, CP ;
(vi) un canal d'accès aléatoire physique, PRACH, de MsgA et un contenu PUSCH dans la même LBT (écoute avant transmission) ;
(vii) un CP étendu et une LBT raccourcie ; ou
(viii) des caractéristiques de rampe différenciées pour des dispositifs hautement prioritaires.

7. Procédé selon l'une quelconque des revendications 1 à 6, dans lequel :

(i) l'au moins une configuration de transmission prioritaire configure le dispositif pour la répétition ;
(ii) un facteur de répétition est signalé au dispositif via un paramètre de commande de ressources radio, RRC, dans le champ d'allocation de ressources temporelles PUSCH d'un octroi de liaison montante RAR ;
(iii) un facteur de répétition est signalé au dispositif via un paramètre spécifié dans un octroi de liaison montante RAR ;
(iv) un facteur de répétition est signalé au dispositif via un paramètre RRC conjointement avec un champ au format DCI 1_0 ; ou
(v) un facteur de répétition est signalé au dispositif à l'aide d'un champ de répétition fourni dans un format DCI 1_0 ou d'une RAR avec CRC embrouillé par TC-RNTI ou RA-RNTI.

8. Procédé selon l'une quelconque des revendications 1 à 7, dans lequel le dispositif est associé à un service essentiel de sécurité publique ou à un service prioritaire multimédia.

9. Procédé selon l'une quelconque des revendications 1 à 8, dans lequel l'au moins une configuration de transmission prioritaire indique en outre la priorisation de transmission PRACH.

10. Procédé (800) destiné à être utilisé dans un dispositif, le procédé comprenant :

la réception (820) d'un message d'octroi provenant d'un noeud indiquant une première puissance de transmission ; et
l'envoi (830) d'une transmission de canal partagé de liaison montante physique, PUSCH, de procédure d'accès aléatoire, au noeud avec la première puissance de transmission, dans lequel la première puissance de transmission est basée, au moins en partie, sur un état de priorité élevée du dispositif.

11. Procédé selon la revendication 10, comprenant en outre :

l'envoi (810) d'un premier message au noeud,
dans lequel le message d'octroi est un octroi RAR en réponse au premier message, et

dans lequel le premier message est un Msg1 et la transmission PUSCH de procédure d'accès aléatoire est un Msg3 envoyé dans le cadre d'une procédure d'accès aléatoire en 4 étapes.

12. Procédé selon la revendication 10 ou 11, dans lequel :

(i) le message d'octroi indique une valeur de décalage de puissance pour des transmissions classées par priorité ;
(ii) le message d'octroi indique une puissance de décalage par rapport à une puissance de transmission de préambule ;
(iii) la première puissance de transmission est signalée par une valeur dans un champ de commande TPC et/ou un champ de décalage TPC du message d'octroi ; ou
(iv) la première puissance de transmission est indiquée par une valeur dans le message d'octroi établissant une correspondance avec un tableau de valeurs de puissance de transmission ou de décalage pour des transmissions PUSCH provenant de dispositifs ayant une priorité élevée.

13. Procédé selon l'une quelconque des revendications 10 à 12, dans lequel la première puissance de transmission est indiquée par une commande TPC configurée dans un message RAR de repli, un message RRC pour des UE ou des services de haute priorité, ou des informations de contrôle de liaison descendante, DCI, pour planifier la retransmission de Msg3.

14. Programme informatique comprenant des instructions qui, lorsqu'elles sont exécutées par des circuits de traitement d'un appareil, amènent l'appareil à exécuter le procédé selon l'une quelconque des revendications 1 à 9 ou des revendications 10 à 13.

15. Support contenant le programme informatique selon la revendication 14, dans lequel le support est l'un d'un signal électronique, d'un signal optique, d'un signal radio et d'un support de stockage lisible par ordinateur.

16. Dispositif (201, 202), le dispositif étant configuré pour :

recevoir des informations de système de diffusion provenant d'un noeud indiquant une ou plusieurs configurations de transmissions prioritaires pour des dispositifs hautement prioritaires ;
déterminer que le dispositif est activé pour au moins l'une des configurations de transmissions prioritaires sur la base, au moins en partie, des informations système diffusées et d'un état du dispositif, dans lequel l'au moins une configuration de transmission prioritaire indique une puissance de transmission pour des transmissions de canal partagé de liaison montante physique, PUSCH, de procédure d'accès aléatoire par des dispositifs hautement prioritaires ; et
envoyer une transmission PUSCH de procédure d'accès aléatoire en utilisant la puissance de transmission indiquée par l'au moins une configuration de transmission prioritaire.

17. Dispositif selon la revendication 16, dans lequel le dispositif est en outre configuré pour exécuter les étapes de l'une quelconque des revendications 2 à 9.

18. Dispositif (201, 202), le dispositif étant configuré pour :

recevoir un message d'octroi provenant d'un noeud indiquant une première puissance de transmission ; et
envoyer une transmission de canal partagé de liaison montante physique, PUSCH, de procédure d'accès aléatoire au noeud avec la première puissance de transmission, dans lequel la première puissance de transmission est basée, au moins en partie, sur un état de priorité élevée du dispositif.

19. Dispositif selon la revendication 18, dans lequel le dispositif est en outre configuré pour exécuter les étapes de l'une quelconque des revendications 11 à 13.

110

Step 1: Random Access Preamble

112

Step 2: Random Access Response

114

Step 3: Scheduled Transmission

116

Step 4: Contention Resolution

**FIG. 1A**

120

msgA: PRACH

msgA: PUSCH

122

msgB

**FIG. 1B**

**FIG. 2**

**FIG. 3**

FIG. 4

500

s510

determining a transmit power and/or priority status of a UE

sending a first message to a node with a first transmit power, wherein the first message is a random access procedure PUSCH transmission and the first transmit power is based at least in part on a high priority status of the UE

s520

receiving a second message from the node

s530

**FIG. 5A**

550

receiving from a node (e.g., gNB) one or more differentiated transmit configurations ⌐s560

selecting a differentiated transmit configuration for use in sending a first message ⌐s570

sending a first message to the node with at least one of the differentiated transmit configurations, wherein the first message is a random access procedure PUSCH transmission and the differentiated transmit configuration is based at least in part on a high priority status of the UE ⌐s580

receiving a second message from the node ⌐s590

FIG. 5B

600

s610

determining that one or more UEs have a high priority status

s620

determining one or more differentiated transmit power configurations for random access procedure PUSCH transmissions

s630

signaling a differentiated transmit power configuration to one or more devices

**FIG. 6A**

650

determining that a first UE has a high priority status for random access procedure PUSCH transmissions    s660

determining one or more differentiated transmission configurations for random access procedure PUSCH transmissions    s670

signaling a differentiated transmission configuration to one or more devices    s680

receiving one or more messages from the first UE sent using the signaled differentiated transmission configuration    s690

**FIG. 6B**

700

receiving broadcast system information from a node indicating one or more priority transmission configurations for high priority devices _s710_

determining that the device is enabled for at least one of the priority transmission configurations based at least in part on the broadcasted system information and a status of the device _s720_

determining a transmit power for the random access message based at least in part on a priority transmission configuration enabled for the device _s730_

sending a random access procedure physical uplink share channel, PUSCH, transmission using the at least one priority transmission configuration _s740_

**FIG. 7**

800

sending a first message to a node ⌐ s810

receiving a grant message from the node indicating a first transmit power ⌐ s820

sending a random access procedure PUSCH transmission to the node with the first transmit power, wherein the first transmit power is based at least in part on a high priority status of the device ⌐ s830

**FIG. 8**

900

s910

determining one or more priority transmission configurations for high priority devices

s920

broadcasting system information indicating one or more priority transmission configurations for random access procedure PUSCH transmissions by high priority devices

s930

receiving a random access procedure physical uplink share channel, PUSCH, transmission from a high priority device

FIG. 9

1000

determining that a device has a high priority status ⌐ s1010

determining a priority transmission configuration for random access procedure PUSCH transmissions from the high priority device ⌐ s1020

sending a grant message to the device indicating the priority transmission configuration ⌐ s1030

receiving a random access procedure PUSCH transmission from the device ⌐ s1040

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PERSPECTA LABS et al.** PRACH prioritization for MPS and MCS. *3GPP R2-1910871,* 26 August 2019

- **ERICSSON.** Power control of msgA PUSCH transmissions. *3GPP R1-1907183,* 13 May 2019
- **ERICSSON.** Remaining issues of UL data transmission procedure. *R1-1807258,* 21 May 2018